(19) Europäisches Patentamt
European Patent Office
Office européen des brevets

(11) EP 2 660 285 B1

(12) **EUROPEAN PATENT SPECIFICATION**

(45) Date of publication and mention of the grant of the patent:
**25.05.2016 Bulletin 2016/21**

(21) Application number: **11854050.9**

(22) Date of filing: **26.12.2011**

(51) Int Cl.:
***C08L 13/00*** *(2006.01)* ***C08K 3/36*** *(2006.01)*
***C08L 9/02*** *(2006.01)* ***C08L 83/04*** *(2006.01)*

(86) International application number:
**PCT/JP2011/080087**

(87) International publication number:
**WO 2012/090941 (05.07.2012 Gazette 2012/27)**

(54) **RUBBER COMPOSITION AND CROSSLINKED RUBBER PRODUCT**
KAUTSCHUKZUSAMMENSETZUNG UND VERNETZTES KAUTSCHUKPRODUKT
COMPOSITION DE CAOUTCHOUC ET PRODUIT DE CAOUTCHOUC RÉTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2010 JP 2010290071**
**17.03.2011 JP 2011058938**
**29.07.2011 JP 2011166331**

(43) Date of publication of application:
**06.11.2013 Bulletin 2013/45**

(73) Proprietor: **Zeon Corporation**
**Tokyo 100-8246 (JP)**

(72) Inventors:
- **NAKASHIMA, Tomonori**
**Tokyo 100-8246 (JP)**
- **MORI, Kentarou**
**Tokyo 100-8246 (JP)**
- **SAKAMOTO, Masato**
**Tokyo 100-8246 (JP)**
- **EMORI, Nobuyoshi**
**Tokyo 100-8246 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**JP-A- 9 048 879** **JP-A- 9 067 473**
**JP-A- 2002 212 341** **JP-A- 2002 275 312**
**JP-A- 2002 302 571** **JP-A- 2002 372 061**
**JP-A- 2003 120 824** **US-A1- 2002 061 961**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 660 285 B1

## Description

TECHNICAL FIELD

The present invention relates to a nitrile rubber composition which has excellent workability and can give cross-linked rubber which is excellent in normal physical properties and cold resistance and has little change in physical properties even when used in contact with oil and to cross-linked rubber which is obtained by using that nitrile rubber composition. Further, the present invention relates to a rubber composition for sliding member use which can give cross-linked rubber low in skin friction resistance and to cross-linked rubber for sliding member use which is obtained by using that rubber composition.

BACKGROUND ART

Since the past, nitrile rubber (acrylonitrile-butadiene copolymer rubber) has been used as a material for hoses, tubes, and other automotive use rubber parts by making use of its oil resistance, mechanical properties, chemical resistance, etc. Further, hydrogenated nitrile rubber (hydrogenated acrylonitrile-butadiene copolymer rubber) which is obtained by hydrogenating the carbon-carbon double bonds in the polymer main chain of nitrile rubber is further excellent in heat resistance, so is being used for seals, belts, hoses, diaphragms, and other rubber parts.

As the compositions of such nitrile rubber, for example, Patent Document 1 proposes a nitrile rubber composition which contains hydrogenated nitrile rubber which has $\alpha,\beta$-ethylenically unsaturated dicarboxylic acid monoester monomer units and a polyamine-based cross-linking agent and basic cross-linking accelerator. Note that, in Patent Document 1, to improve the workability of the nitrile rubber composition and the normal physical properties and cold resistance when made into a cross-linked product, a plasticizer is used. However, when blending a plasticizer into a nitrile rubber composition in this way, while the workability, normal physical properties, and cold resistance are improved, when used for applications in contact with oil (for example, belts, hoses, seals, etc. for automotive part use), there was the problem that the cross-linked product ended up falling in physical properties (for example, hardness or cold resistance) .

JP 2002-212341 A relates to the problem to obtain a rubber material composition having excellent abrasion resistance and slight heat generation by friction which may suitably be used for a sealing device of a rolling apparatus to be used by grease lubrication under a harsh environment in which a large amount of water and dust exist. As a solution to this problem, the document describes a rubber material composition which comprises 100 parts by weight of carboxylated acrylonitrile-butadiene rubber and 20-90 parts by weight of carbon black.

PRIOR ART DOCUMENTS

PATENT DOCUMENTS

Patent Document 1: Japanese Patent Publication No. 2001-55471A (U.S. Patent No. 6,657,014)

DISCLOSURE OF THE INVENTION

PROBLEM TO BE SOLVED BY THE INVENTION

The present invention has as its object the provision of a nitrile rubber composition which has excellent workability and can give cross-linked rubber which is excellent in normal physical properties and cold resistance and has little change in physical properties (for example, changes in hardness and cold resistance) even when used in contact with oil and cross-linked rubber which is obtained by using that nitrile rubber composition. Further, the present invention has as its object the provision of a rubber composition for sliding member use which can give cross-linked rubber low in skin friction resistance and cross-linked rubber for sliding member use which is obtained by using that rubber composition.

MEANS FOR SOLVING THE PROBLEMS

The inventors engaged in intensive research regarding the relationship between rubber which contains a carboxyl group and a reactive silicone oil so as to achieve the above object and as a result discovered the following.

That is, first, the inventors discovered that a nitrile rubber composition which comprises a carboxyl group-containing nitrile rubber into which a reactive silicone oil is blended can give cross-linked rubber which is excellent in normal physical properties and cold resistance and which has little change in physical properties even when used in contact with oil. Further, second, the inventors discovered that a rubber composition which comprises a carboxyl group-containing rubber with a content ratio of monomer units which have unsaturated carbon-carbon double bonds and a

content ratio of monomer units which have halogen atoms in predetermined amounts or less and into which a reactive silicone oil is blended can give a cross-linked rubber which has a low skin friction resistance and that the cross-linked rubber is suitable for applications of seal members of sliding parts. Further, the inventors completed the present invention based on these discoveries.

That is, according to the present invention, there is provided a nitrile rubber composition which contains a carboxyl group-containing nitrile rubber, a reactive silicone oil and at least one cross-linking agent which is selected from the group consisting of an organic peroxide-based cross-linking agent and polyamine-based cross-linking agent; wherein said reactive silicone oil has at least one reactive group which is selected from the group consisting of a hydroxyl group, amino group, mercapto group, epoxy group, carboxyl group, acrylic group, and methacryl group.

In the nitrile rubber composition of the present invention, the carboxyl group-containing nitrile rubber preferably has an iodine value of 120 or less.

In the nitrile rubber composition of the present invention, the carboxyl group-containing nitrile rubber preferably contains α,β-ethylenically unsaturated nitrile monomer units 5 to 60 wt%, carboxyl group-containing monomer units 0.1 to 20 wt%, and conjugated diene monomer units 15 to 94.9 wt%.

Further, the nitrile rubber composition of the present invention preferably further contains silica.

Alternatively, according to the present invention, there is provided a rubber composition for sliding member use which contains a carboxyl group-containing rubber which contains: carboxyl group-containing monomer units in a ratio of 0.1 to 20 wt%, a content ratio of monomer units which have unsaturated carbon-carbon double bonds of 20 wt% or less, and a content ratio of monomer units which have halogen atoms of 5 wt% or less; a reactive silicone oil having at least one reactive group which is selected from the group consisting of a hydroxyl group, amino group, mercapto group, epoxy group, carboxyl group, acrylic group, and methacryl group; and at least one cross-linking agent which is selected from the group consisting of an organic peroxide-based cross-linking agent and polyamine-based cross-linking agent.

In the rubber composition for sliding member use of the present invention, the carboxyl group-containing rubber is preferably a highly saturated nitrile rubber which contains α,β-ethylenically unsaturated nitrile monomer units in a ratio of 5 to 60 wt%.

Further, according to the present invention, there is provided cross-linked rubber obtained by cross-linking the above-mentioned nitrile rubber composition. The cross-linked rubber is preferably a seal member, belt, hose, or gasket.

Further, according to the present invention, there is provided cross-linked rubber for sliding member use obtained by cross-linking the above-mentioned rubber composition for sliding member use. The cross-linked rubber for sliding member use is preferably a seal member for sliding parts.

EFFECTS OF THE INVENTION

According to the present invention, it is possible to provide a nitrile rubber composition which has excellent workability and can give cross-linked rubber which is excellent in normal physical properties and cold resistance and has little change in physical properties (for example, changes in hardness and cold resistance) even when used in contact with oil and cross-linked rubber which is obtained by using that nitrile rubber composition.

Further, according to the present invention, it is possible to provide a rubber composition for sliding member use which can give cross-linked rubber for sliding member use low in skin friction resistance and which is suitable for applications of seal members of sliding parts and cross-linked rubber for sliding member use which is obtained by using that rubber composition for sliding member use and which is low in skin friction resistance.

DESCRIPTION OF EMBODIMENTS

Nitrile Rubber Composition

First, the nitrile rubber composition of the present invention will be explained.

The nitrile rubber composition of the present invention contains carboxyl group-containing nitrile rubber, a reactive silicone oil and at least one cross-linking agent as defined above.

Carboxyl Group-Containing Nitrile Rubber

The carboxyl group-containing nitrile rubber used in the present invention is rubber which is obtained by copolymerization of an α, β-ethylenically unsaturated nitrile monomer, carboxyl group-containing monomer, and another copolymerizable monomer which is added in accordance with need.

The α,β-ethylenically unsaturated nitrile monomer is not particularly limited so long as an α,β-ethylenically unsaturated compound which has a nitrile group. For example, acrylonitrile; α-chloroacrylonitrile, α-bromoacrylonitrile, and other α-halogenoacrylonitrile; methacrylonitrile, and other α-alkyl acrylonitrile; etc. may be mentioned. Among these

as well, acrylonitrile and methacrylonitrile are preferable, while acrylonitrile is more preferable. An α,β-ethylenically unsaturated nitrile monomer may be used as a single type alone or as a plurality of types together.

The content of α,β-ethylenically unsaturated nitrile monomer units is preferably 5 to 60 wt% with respect to the total monomer units, more preferably 10 to 55 wt%, furthermore preferably 15 to 50 wt%. If the content of α,β-ethylenically unsaturated nitrile monomer units is too small, the obtained cross-linked rubber is liable to fall in oil resistance, while conversely if too large, the cold resistance may fall.

The carboxyl group-containing monomer is not particularly limited so long as a monomer which can be copolymerized with an α,β-ethylenically unsaturated nitrile monomer and has at least one unsubstituted (free) carboxyl group which is not esterified. By using a carboxyl group-containing monomer, it is possible to introduce a carboxyl group into the nitrile rubber.

As the carboxyl group-containing monomer used in the present invention, for example, an α,β-ethylenically unsaturated monocarboxylic acid monomer, α,β-ethylenically unsaturated polyhvalent carboxylic acid monomer, α,β-ethylenically unsaturated dicarboxylic acid monoester monomer, etc. may be mentioned. Also, the carboxyl group-containing monomer may also include a monomer where the carboxyl group of the monomer forms a carboxylate. Further, in an anhydride of an α,β-ethylenically unsaturated polyvalent carboxylic acid, the acid anhydride group is cleaved after copolymerization to form a carboxyl group, so this can be used as a carboxyl group-containing monomer.

As the α,β-ethylenically unsaturated monocarboxylic acid monomer, acrylic acid, methacrylic acid, ethylacrylic acid, crotonic acid, cinnamic acid, etc. may be mentioned.

As the α,β-ethylenically unsaturated polyvalent carboxylic acid monomer, fumaric acid, maleic acid, and other butenedioic acids, itaconic acid, citraconic acid, mesaconic acid, glutaconic acid, allylmalonic acid, teraconic acid, etc. may be mentioned. Further, as anhydrides of α,β-unsaturated polyvalent carboxylic acids, maleic anhydride, itaconic anhydride, citraconic anhydride, etc. may be mentioned.

As the α,β-ethylenically unsaturated dicarboxylic acid monoester monomer, monomethyl maleate, monoethyl maleate, monopropyl maleate, mono n-butyl maleate, and other maleic acid monoalkyl esters; monocyclopentyl maleate, monocyclohexyl maleate, monocycloheptyl maleate, and other maleic acid monocycloalkyl esters; monomethylcyclopentyl maleate, monoethylcyclohexyl maleate, and other maleic acid monoalkyl cycloalkyl esters; monomethyl fumarate, monoethyl fumarate, monopropyl fumarate, mono n-butyl fumarate, and other fumaric acid monoalkyl esters; monocyclopentyl fumarate, monocyclohexyl fumarate, monocycloheptyl fumarate, and other fumaric acid monocycloalkyl esters; monomethylcyclopentyl fumarate, monoethylcyclohexyl fumarate, and other fumaric acid monoalkyl cycloalkyl esters; monomethyl citraconate, monoethyl citraconate, monopropyl citraconate, mono n-butyl citraconate, and other citraconic acid monoalkyl esters; monocyclopentyl citraconate, monocyclohexyl citraconate, monocycloheptyl citraconate, and other citraconic acid monocycloalkyl esters; monomethylcyclopentyl citraconate, monoethylcyclohexyl citraconate, and other citraconic acid monoalkyl cycloalkyl esters; monomethyl itaconate, monoethyl itaconate, monopropyl itaconate, mono n-butyl itaconate, and other itaconic acid monoalkyl esters; monocyclopentyl itaconate, monocyclohexyl itaconate, monocycloheptyl itaconate, and other itaconic acid monocycloalkyl esters; monomethylcyclopentyl itaconate, monoethylcyclohexyl itaconate, and other itaconic acid monoalkyl cycloalkyl esters; etc. may be mentioned.

The carboxyl group-containing monomer may be used as a single type alone or as a plurality of types together. Among these as well, since the advantageous effects of the present invention become more remarkable, an α,β-ethylenically unsaturated dicarboxylic acid monoester monomer is preferable, a maleic acid monoalkyl ester is more preferable, and mono n-butyl maleate is particularly preferable. Note that, the above-mentioned maleic acid monoalkyl ester preferably has an alkyl group of 2 to 8 carbon atoms.

The content of carboxyl group-containing monomer units is preferably 0.1 to 20. wt% with respect to the total monomer units, more preferably 0.2 to 15 wt%, furthermore preferably 0.5 to 10 wt%. If the content of carboxyl group-containing monomer units is too small, the obtained cross-linked rubber is liable to deteriorate in mechanical strength and compression set, while conversely if too large, the nitrile rubber composition is liable to deteriorate in scorch stability or the obtained cross-linked rubber is liable to fall in fatigue resistance.

Further, the carboxyl group-containing nitrile rubber used in the present invention is preferably one which is copolymerized, in addition to the α,β-ethylenically unsaturated nitrile monomer and carboxyl group-containing monomer, conjugated diene monomers, from the viewpoint of the obtained cross-linked product expressing rubber elasticity.

As the conjugated diene monomer which forms the conjugated diene monomer units, 1,3-butadiene, isoprene, 2,3-dimethyl-1,3-butadiene, 1,3-pentadiene, chloroprene, and other conjugated diene monomers containing 4 to 6 carbon atoms are preferable, 1,3-butadiene and isoprene are more preferable, and 1,3-butadiene is particularly preferable. The conjugated diene monomer may be used as a single type alone or as a plurality of types together.

The content of the conjugated diene monomer units is preferably 15 to 94.9 wt% with respect to the total monomer units, more preferably 20 to 89.8 wt%, furthermore preferably 25 to 84.5 wt%. If the content of the conjugated diene monomer units is too small, the obtained cross-linked rubber is liable to fall in rubber elasticity, while conversely if too large, the heat resistance and the chemical stability may be impaired. Note that, the content of the above-mentioned conjugated diene monomer units is, in the case of performing the later mentioned hydrogenation, the content including

also the hydrogenated part.

Further, the carboxyl group-containing nitrile rubber used in the present invention may be copolymerized together with the α,β-ethylenically unsaturated nitrile monomer, carboxyl group-containing monomer, and conjugated diene monomer with other monomer which can be copolymerized with these. As such other monomer, ethylene, an α-olefin monomer, aromatic vinyl monomer, α,β-ethylenically unsaturated carboxylic acid ester monomer (except one corresponding to the above-mentioned "carboxyl group-containing monomer"), fluorine-containing vinyl monomer, copolymerizable anti-aging agent, etc. may be illustrated.

As the α-olefin monomer, a monomer containing 3 to 12 carbon atoms is preferable. For example, propylene, 1-butene, 4-methyl-1-pentene, 1-hexene, 1-octene, etc. may be mentioned.

As the aromatic vinyl monomer, for example, styrene, α-methylstyrene, vinylpyridine, etc. may be mentioned.

As the α,β-ethylenically unsaturated carboxylic acid ester monomer, for example, methyl acrylate, ethyl acrylate, n-butyl acrylate, n-dodecyl acrylate, methyl methacrylate, ethyl methacrylate, and other (meth) acrylic acid esters (abbreviation for "methacrylic acid esters and acrylic acid esters", same below) which have alkyl groups with 1 to 18 carbon atoms; methoxymethyl acrylate, methoxyethyl acrylate, methoxyethyl methacrylate, and other (meth) acrylic acid esters which have alkoxyalkyl groups with 2 to 12 carbon atoms; α-cyanoethyl acrylate, α-cyanoethyl methacrylate, α-cyanobutyl methacrylate, and other (meth)acrylic acid esters which have cyanoalkyl groups with 2 to 12 carbon atoms; 2-hydroxyethyl acrylate, 2-hydroxypropyl acrylate, 2-hydroxyethyl methacrylate, and other (meth) acrylic acid esters which have hydroxyalkyl groups with 1 to 12 carbon atoms; trifluoroethyl acrylate, tetrafluoropropyl methacrylate, and other (meth)acrylic acid esters which have fluoroalkyl groups with 1 to 12 carbon atoms; dimethyl maleate, dimethyl fumarate, dimethyl itaconate, diethyl itaconate, and other α,β-ethylenically unsaturated dicarboxylic acid dialkyl esters; dimethylaminomethyl acrylate, diethylaminoethyl acrylate, and other dialkyl amino group-containing α,β-ethylenically unsaturated carboxylic acid esters; etc. may be mentioned.

As the fluorine-containing vinyl monomer, for example, fluoroethylvinyl ether, fluoropropylvinyl ether, o-trifluoromethylstyrene, vinyl pentafluorobenzoate, difluoroethylene, tetrafluoroethylene, etc. may be mentioned.

As the copolymerizable anti-aging agent, for example, N-(4-, anilinophenyl)acrylamide, N-(4-anilinophenyl)methacrylamide, N-(4-anilinophenyl)cinnamamide, N-(4-anilinophenyl)crotonamide, N-phenyl-4-(3-vinyl benzyloxy)aniline, N-phenyl-4-(4-vinyl benzyloxy)aniline, etc. may be mentioned.

These copolymerizable other monomers may be used together in a plurality of types. The content of the units of the other monomers is preferably 50 wt% or less with respect to the total monomer units, more preferably 30 wt% or less, furhtermore preferably 10 wt% or less.

The carboxyl group-containing nitrile rubber has an iodine value of preferably 120 or less, more preferably 60 or less, furthermore preferably 40 or less, particularly preferably 30 or less. By making the iodine value 120 or less, the obtained cross-linked rubber can be improved in heat resistance and ozone resistance.

The carboxyl group-containing nitrile rubber has a polymer Mooney viscosity ($ML_{1+4}$, 100°C) of preferably 10 to 200, more preferably 15 to 150, furthermore preferably 15 to 100, particularly preferably 30 to 70. If the carboxyl group-containing nitrile rubber has a polymer Mooney viscosity which is too low, the obtained cross-linked rubber is liable to fall in mechanical properties, while conversely if too high, the nitrile rubber composition may fall in workability.

Further, in the carboxyl group-containing nitrile rubber, the content of the carboxyl groups, that is, the number of moles of the carboxyl group per 100 g of the carboxyl group-containing nitrile rubber, is preferably $5\times10^{-4}$ to $5\times10^{-1}$ ephr, more preferably $1\times10^{-3}$ to $1\times10^{-1}$ ephr, particularly preferably $5\times10^{-3}$ to $6\times10^{-2}$ ephr. If the carboxyl group-containing nitrile rubber has a carboxyl group content which is too small, the obtained cross-linked rubber is liable to fall in mechanical strength, while if too large, the cold resistance may fall.

The method of production of the carboxyl group-containing nitrile rubber of the present invention is not particularly limited, but it is preferable to produce it by using emulsion polymerization using an emulsifying agent so as to copolymerize the above-mentioned monomers to prepare a latex of copolymer rubber and hydrogenate the same. At the time of emulsion polymerization, an emulsifying agent, polymerization initiator, molecular weight adjuster, or other usually used secondary polymerization material may be used.

The emulsifying agent is not particularly limited, but, for example, polyoxyethylenealkyl ether, polyoxyethylenealkylphenol ether, polyoxyethylenealkyl ester, polyoxyethylenesorbitanalkyl ester, and other nonionic emulsifying agent; a salt of myristic acid, palmitic acid, oleic acid, linoleic acid, and other fatty acid, sodium dodecylbenzene sulfonate and other alkylbenzene sulfonate, higher alcohol sulfuric ester salt, alkyl sulfosuccinic acid salt, and other anionic emulsifying agent; sulfoester of α,β-unsaturated carboxylic acid, sulfate ester of α,β-unsaturated carboxylic acid, sulfoalkyl arylether, and other copolymerizable emulsifying agent; etc. may be mentioned. The amount of use of the emulsifying agent is preferably 0.1 to 10 parts by weight with respect to 100 parts by weight of the total monomers.

The polymerization initiator is not particularly limited if a radical initiator, but potassium persulfate, sodium persulfate, ammonium persulfate, potassium perphosphate, hydrogen peroxide, and other inorganic peroxides; t-butyl peroxide, cumen hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butyl peroxyisobutyrate,

and other organic peroxides; azobisisobutyronitrile, azobis-2,4-dimethyl valeronitrile, azobiscyclohexane carbonitrile, methyl azobisisobutyrate, and other azo compounds; etc. may be mentioned. These polymerization initiators may be used alone or in two types or more combined. As the polymerization initiator, the inorganic or organic peroxide is preferable. When using the peroxide as the polymerization initiator, it may be combined with sodium hydrogen sulfite, ferrous sulfate, and other reducing agent for use as a redox based polymerization initiator. The amount of use of the polymerization initiator is preferably 0.01 to 2 parts by weight with respect to 100 parts by weight of the total monomers.

The molecular weight adjuster is not particularly limited, but, t-dodecyl mercaptan, n-dodecyl mercaptan, octyl mercaptan, and other mercaptans; carbon tetrachloride, methylene chloride, methylene bromide, and other halogenated hydrocarbon; $\alpha$-methylstyrene dimer; tetraethylthiuram disulfide, dipentamethylene thiuram disulfide, diisopropyl xantogen disulfide, and other sulfur-containing compounds etc. may be mentioned. These may be used alone or in two or more types combined. Among these as well, mercaptans are preferable, and t-dodecyl mercaptan is more preferable. The amount of use of the molecular weight adjuster is preferably 0.1 to 0.8 part by weight with respect to 100 parts by weight of the total monomers.

For the medium of the emulsion polymerization, usually, water is used. The amount of water is preferably 80 to 500 part by weight with respect to 100 parts by weight of the total monomers.

At the time of emulsion polymerization, further, in accordance with need, a stabilizer, dispersant, pH adjuster, deoxidant, particle size adjuster, or other secondary polymerization material may be used. In the case of using these, the types and amounts of use are also not limited.

Note that, when the obtained copolymer by copolymerizing has an iodine value higher than 120, it is also possible to hydrogenate the copolymer (perform a hydrogen addition reaction) so as to make the iodine value 120 or less. In this case, the method of hydrogenation is not particularly limited. A known method may be employed.

Reactive Silicone Oil

The reactive silicone oil used in the present invention is silicone oil which has reactive groups and acts as a plasticizer in the nitrile rubber composition of the present invention. Further, the reactive silicone oil used in the present invention forms chemical bonds with carboxyl group-containing nitrile rubber when cross-linking the nitrile rubber composition to obtain cross-linked rubber.

For this reason, in the present invention, by adding a reactive silicone oil, due to its action as a plasticizer in a nitrile rubber composition, it can act as a plasticizer and impart excellent workability. Further, the reactive silicone oil used in the present invention forms chemical bonds with carboxyl group-containing nitrile rubber when cross-linking the nitrile rubber composition to obtain cross-linked rubber, so when causing cross-linking to obtain cross-linked rubber, even when used in contact with oil, it has the property of being resistant to elution from the cross-linked rubber. For this reason, by blending in a reactive silicone oil, even when used in contact with oil, the plasticizing action by the reactive silicone oil can be maintained well. Due to this, even when used in contact with oil, the changes in physical properties (for example, changes in hardness and cold resistance) can be kept small.

The reactive group which is contained in the reactive silicone oil used in the present invention is a functional group which can react with the carboxyl group which forms part of the above-mentioned carboxyl group-containing nitrile rubber. Such a reactive groupis at least one group selected from the group comprising a hydroxyl group, amino group, mercapto group, epoxy group, carboxyl group, acrylic group ($-OOC-CH=CH_2$, where -OOC- indicates an oxycarbonyl group), and methacryl group ($-OOC-C(CH_3)=CH_2$, where -OOC- indicates an oxycarbonyl group). Among these as well, an amino group, epoxy group, mercapto group, and carboxyl group are more preferable, and an amino group is particularly preferable. Note that, the epoxy group is not particularly limited so long as a group which has an oxirane ring. For example, in addition to one which has a oxirane ring in a linear chain hydrocarbon group, one which has an oxirane ring in a cyclic hydrocarbon group may also be used.

Note that, as the reactive silicone oil used in the present invention, for example, one of the following general formula (1), the following general formula (2), the following general formula (3), the following general formula (4), or the following general formula (5) may be used. Among these as well, ones of the following general formulas (1) and (2) are preferable, while from the points of the high reactivity and the ability to act well as a cross-linking agent when blended with a nitrile rubber composition, ones of the following general formulas (6) and (7) are more preferable, while one of the following general formula (7) is particularly preferable.

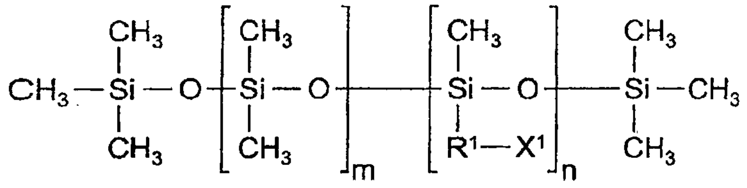

(1)

(where, in the above-mentioned formula (1), $R^1$ is a bivalent hydrocarbon group with 1 to 30 carbon atoms, preferably with 1 to 10 carbon atoms which may have a hetero atom in its main chain and/or side chain, $X^1$ is any reactive group explained above, "m" is an integer of 1 to 10,000, and "n" is an integer of 1 to 10,000.)

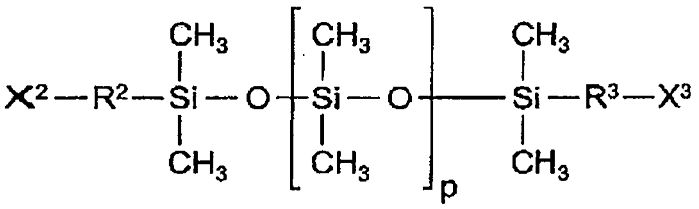

(2)

(where, in the above-mentioned formula (2), $R^2$ and $R^3$ respectively independently are bivalent hydrocarbon groups with 1 to 30 carbon atoms, preferably with 1 to 10 carbon atoms which may have hetero atoms in its main chain and/or side chain, $X^2$ and $X^3$ respectively independently are any reactive groups explained above, and "p" is an integer of 1 to 10,000. $R^2$ and $R^3$ may be the same or may be different. Further, $X^2$ and $X^3$ may be the same or may be different.)

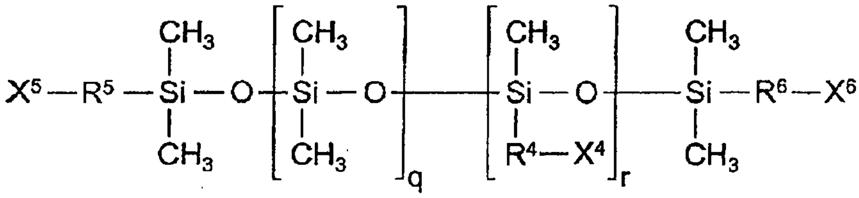

(3)

(where, in the above-mentioned formula (3), $R^4$, $R^5$, and $R^6$ respectively independently are bivalent hydrocarbon groups with 1 to 30 carbon atoms, preferably with 1 to 10 carbon atoms which may have hetero atoms in its main chain and/or side chain, $X^4$, $X^5$, and $X^6$ respectively independently are any reactive groups explained above, and "q" is an integer of 1 to 10,000 and "r" is an integer of 1 to 10,000. $R^4$, $R^5$, and $R^6$ may be the same or may be different. Further, $X^4$, $X^5$, and $X^6$ may be the same or may be different.)

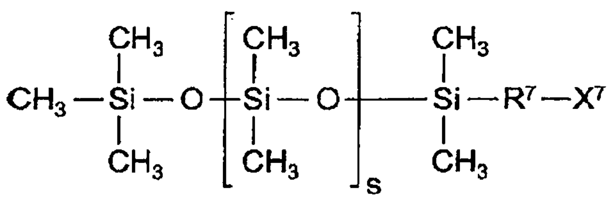

(4)

(where, in the above-mentioned formula (4), $R^7$ is a bivalent hydrocarbon group with 1 to 30 carbon atoms, preferably with 1 to 10 carbon atoms which may have a hetero atom in its main chain and/or side chain, $X^7$ is any reactive group explained above, and "s" is an integer of 1 to 10,000)

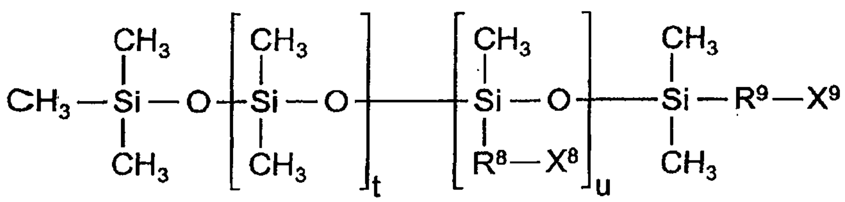

(5)

(where, in the above-mentioned formula (5), $R^8$ and $R^9$ respectively independently are bivalent hydrocarbon groups with 1 to 30 carbon atoms, preferably with 1 to 10 carbon atoms which may have hetero atoms in its main chain and/or side chain, $X^8$ and $X^9$ respectively independently are any reactive groups explained above, "t" is an integer of 1 to 10,000, and "u" is an integer of 1 to 10,000. $R^8$ and $R^9$ may be the same or may be different. Further, $X^8$ and $X^9$ may be the same or may be different.)

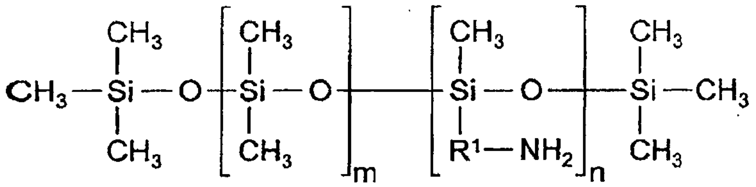

(6)

(where, in the above-mentioned formula (6), $R^1$, "m", and "n" are respectively the same as in the above-mentioned formula (1).)

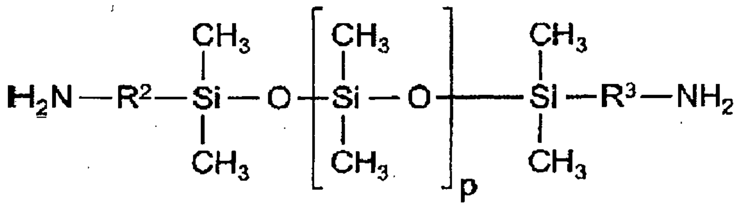

(7)

(where, in the above-mentioned formula (7), $R^2$, $R^3$, and "p" are respectively the same as in the above-mentioned formula (2).)

Note that, when the above-mentioned $R^1$, $R^2$, $R^3$, $R^4$, $R^5$, $R^6$, $R^7$, $R^8$, and/or $R^9$ has a hetero atom in its main chain and/or side chain, as the hetero atom, an oxygen atom, sulfur atom, and nitrogen atom are preferable, while an oxygen atom is particularly preferable.

Further, the reactive silicone oils of the above-mentioned formula (1) and formula (6) are side-chain type reactive group-modified silicone oils which have reactive groups at their side chain, the reactive silicone oils of the above-mentioned formula (2) and formula (7) are two-end type reactive group-mnodified silicone oils which have reactive groups at their two ends, the reactive silicone oil of the above-mentioned formula (3) is a side-chain two-end type reactive group-modified silicone oil which has reactive groups at its side chain and two ends, the reactive silicone oil of the above-mentioned formula (4) is a single-end type reactive group-modified silicone oil which has a reactive group at one end, and, further, the reactive silicone oil of the above-mentioned formula (5) is a side-chain single-end type reactive group-modified silicone oil which has a reactive group at its side chain and one end.

Note that, the reactive silicone oil of the above-mentioned formula (1) is commercially available as the product name "KF-868", "KF-859", "KF-102", "KF-1001", "KF-2001", "X-22-3701E", and "X-22-4741" (all made by ShinEtsu Chemical Co., Ltd.) and that commercially available ones can be used. The reactive silicone oil of the above-mentioned formula (2) is commercially available as the product name "X-22-161B", "X-22-162C", "X-22-163B", "X-22-164B", "X-22-167B", "X-22-169B", and "X-22-4952" (all made by ShinEtsu Chemical Co., Ltd.) and such commercially available ones can be used. Further, the reactive silicone oil of the above-mentioned formula (3) is commercially available as the product name "KF-857" and "X-22-9002" (all made by ShinEtsu Chemical Co., Ltd.) etc. and such commercially available ones can be used. Further, the reactive silicone oil of the above-mentioned formula (4) is commercially available as the product name "X-22-173DX", "X-22-170DX", "X-22-174DX", "X-22-176DX", and "X-22-3710" (all made by ShinEtsu Chemical Co., Ltd.) and such commercially available ones can be used.

The reactive silicone oil has a weight average molecular weight of preferably 200 to 100,000, more preferably 200 to 50,000, furhtermore preferably 200 to 20,000. If the reactive silicone oil has a weight average molecular weight which is too low, the effect of addition of the reactive silicone oil is liable to become smaller, while if too large, the reactive silicone oil is liable to become high in viscosity and difficult to handle.

Note that, as the dynamic viscosity (20°C, units: $mm^2/s$) of the reactive silicone oil, 10 to 10000 is preferable, 20 to 1000 is more preferable, and 20 to 500 is particularly preferable.

Further, the content of the reactive silicone oil in the nitrile rubber composition of the present invention is preferably 0.1 to 2.00 parts by weight with respect to 100 parts by weight of the carboxyl group-containing nitrile rubber, more preferably 0.5 to 100 parts by weight, furthermore preferably 5 to 60 parts by weight. If the content of the reactive silicone oil is too small, the effect of adding in the reactive silicone oil becomes hard to obtain, while if too large, the obtained cross-linked rubber is liable to fall in physical properties (for example, strength and elongation).

Other Compounding Agents

Further, the nitrile rubber composition of the present invention also contains a cross-linking agent as defined above. The cross-linking agent is selected from the group consisting of an organic peroxide-based cross-linking agent

and polyamine-based cross-linking agent. A polyamine-based cross-linking agent is preferable.

As the organic peroxide-based cross-linking agent, a conventionally known one may be used. Dicumyl peroxide, cumen hydroperoxide, t-butylcumyl peroxide, p-menthane hydroperoxide, di-t-butylperoxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butyl-peroxy)-n-butylvalerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoylperoxide, t-butylperoxyisopropyl carbonate, t-butylperoxybenzoate, etc. may be mentioned. These may be used as single type alone or as a plurality of types combined.

The polyamine-based cross-linking agent is not particularly limited so long as a compound having two or more amino groups or a compound of a form having two or more amino groups at the time of cross-linking, but a compound of an aliphatic hydrocarbon or aromatic hydrocarbon with its plurality of hydrogen atoms substituted by amino groups or hydrazide structures (structures expressed by $-CONHNH_2$, where CO indicates a carbonyl group) and a compound of a form which becomes that at the time of cross-linking are preferable. As specific examples, hexamethylenediamine, hexamethylenediamine carbamate, tetramethylenepentamine, hexamethylenediamine-cinnamaldehyde adduct, hexamethylene diamine dibenzoate salt, and other aliphatic polyvalent amines; 2,2-bis{4-(4-aminophenoxy)phenyl}propane, 4,4'-methylene dianiline, m-phenylenediamine, p-phenylenediamine, 4, 4'-methylene bis(o-chloroaniline), and other aromatic polyvalent amines; dihydrazide isophthalate, dihydrazide adipate, dihydrazide sebacate, and other compounds which have two or more hydrazide structures; etc. may be mentioned. Among these as well, hexamethylenediamine carbamate is particularly preferable.

Here, the above-mentioned reactive silicone oil sometimes also acts as a cross-linking agent depending on its type. For this reason, the amount of the cross-linking agent in the nitrile rubber composition of the present invention is preferably suitably determined in accordance with the type and amount of the reactive silicone oil used, but the amount of, the cross-linking agent is preferably 0.1 to 50 parts by weight with respect to 100 parts by weight of the carboxyl group-containing nitrile rubber, more preferably 0.5 to 25 parts by weight, furhtermore preferably 1 to 10 parts by weight.

Further, the nitrile rubber composition of the present invention preferably further contains a basic cross-linking accelerator. By further including a basic cross-linking accelerator, the advantageous effects of the present invention become even more remarkable.

As specific examples of the basic cross-linking accelerator, 1,8-diazabicyclo[5,4,0]undecene-7 (below, sometimes abbreviated as "DBU") and 1,5-diazabicyclo[4,3,0]nonene-5 (below, sometimes abbreviated as "DBN"), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole, 1-methyl-2-phenylimidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, 1-methyl-4-(2-aminoethyl)imidazole, 1-methylbenzoimidazole, 1-methyl-2-benzylbenzoimidazole, 1-methyl-5-nitrobenzoimidazole, 1-methylimidazoline, 1,2-dimethylimidazoline, 1,2,4-trimethylimidazoline, 1,4-dimethyl-2-ethylimidazoline, 1-methylphenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, 1-ethoxymethyl-2-methylimidazoline, and other basic cross-linking accelerators which have cyclic amidine structures; tetramethylguanidine, tetraethylguanidine, diphenylguanidine, 1,3-di-ortho-tolylguanidine, o-tolylbiguanide, and other guanidine-based basic cross-linking accelerators; n-butylaldehyde aniline, acetoaldehyde ammonia, and other aldehyde amine-based basic cross-linking accelerators; etc. may be mentioned. Among these as well, guanidine-based basic cross-linking accelerators and basic cross-linking accelerators which have cyclic amidine structures are preferable, 1,3-di-o-tolylguanidine, 1,8-diazabicyclo[5,4,0]undecene-7, and 1,5-diazabicyclo[4,3,0]nonene-5 are more preferable, 1,8-diazabicyclo[5,4,0]undecene-7 and 1,5-diazabicyclo[4,3,0]nonene-5 are ferthermore preferable, 1,8-diazabicyclo[5,4,0]undecene-7 is particularly preferable. Note that, the above-mentioned basic cross-linking accelerators which have cyclic amidine structures may form salts with organic carboxylic acids or alkyl phosphoric acids etc.

In the nitrile rubber composition of the present invention, the amount of the basic cross-linking accelerator is preferably 0.1 to 20 parts by weight with respect to 100 parts by weight of the carboxyl group-containing nitrile rubber, more preferably 0.2 to 15 parts by weight, furthermore preferably 0.5 to 10 parts by weight. If the amount of the basic cross-linking accelerator is too small, the nitrile rubber composition becomes too slow in cross-linking speed and the cross-linking density sometimes falls. On the other hand, if the amount is too large, the nitrile rubber composition becomes too fast in cross-linking speed and scorching occurs or the storage stability is sometimes impaired.

The nitrile rubber composition of the present invention preferably contains silica as a reinforcing agent from the viewpoint of improving the obtained cross-linked rubber in mechanical strength and compression set resistance.

The silica is not particularly limited and need only be a compound which includes ($SiO_2$) in the formula of composition. Specifically, quartz powder, silica powder, and other natural silica; anhydrous silicate (silica gel, Aerosil, etc.), hydrous silicate, and other synthetic silica; metal silicates; etc. may be mentioned. Among these as well, synthetic silica and metal silicates are preferable, and synthetic silica is particularly preferable. Note that, the above-mentioned

natural silica and synthetic silica have formulas of composition of ($SiO_2$) or ($SiO_2 \cdot nH_2O$) ("n" is a positive integer).

Further, the synthetic silica is preferably one which is generally used as a reinforcing material for synthetic rubber as a so-called white reinforcing material (white carbon).

The content of silica in the nitrile rubber composition of the present invention is preferably 5 to 200 parts by weight with respect to 100 parts by weight of the carboxyl group-containing nitrile rubber, more preferably 10 to 100 parts by weight, furthermore preferably 20 to 80 parts by weight. If the content of silica is too small, sometimes the effect of improvement of the mechanical strength cannot be obtained. On the other hand, if the content is too large, sometimes the effect of improvement of the compression set resistance cannot be obtained.

Note that, the silica may be used as a single type alone or as a plurality of types combined.

Further, the nitrile rubber composition of the present invention may have blended into it, in addition to the above-mentioned ingredients, other compounding agents which are usually used in the rubber processing field. As such compounding agents, for example, a reinforcing agent other than silica, filler, antioxidant, photostabilizer, scorch preventer, processing aid, slip agent, tackifier, lubricant, flame retardant, acid acceptor, antifungal agent, antistatic agent, coloring agent, silane coupling agent, co-cross-linking agent, cross-linking aid, cross-linking retardant, foam agent, etc. may be mentioned. As the amounts of these compounding agents, amounts according to the purposes of inclusion may be suitably employed.

Note that, the nitrile rubber composition of the present invention may have blended into it a rubber other than the above-mentioned carboxyl group-containing nitrile rubber in a range not impairing the advantageous effects of the present invention.

As such a rubber, acrylic rubber, ethylene-acrylic acid copolymer rubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluororubber, natural rubber, polyisoprene rubber, etc. may be mentioned.

The amount of the rubber other than carboxyl group-containing nitrile rubber in the nitrile rubber composition when blending it is is preferably 60 parts by weight or less with respect to 100 parts by weight of the carboxyl group-containing nitrile rubber, more preferably 30 parts by weight or less, furthermore preferably 10 parts by weight or less.

Further, the nitrile rubber composition of the present invention may have blended into it a plasticizer in addition to the above-mentioned reactive silicone oil in a range not impairing the advantageous effects of the present invention. The plasticizer is not particularly limited. It is possible to use a plasticizer which is usually used in the rubber processing field, but not blending in a plasticizer is preferable since the advantageous effects of the present invention become more remarkable.

The nitrile rubber composition of the present invention is prepared by mixing the above-mentioned ingredients in a preferably nonaqueous system. As the method of suitably preparing the nitrile rubber composition of the present invention, kneading the ingredients other than the reactive silicone oil, cross-linking agent, and other ingredients which are unstable under heat by a Bambury mixer, internal mixer, kneader, or other mixing machine for primary kneading, then transferring the knead to an open roll etc. and adding the reactive silicone oil, cross-linking agent, and other ingredients whch are unstable under heat for secondary kneading etc. may be mentioned. Note that, the primary kneading is usually performed at 10 to 200°C, preferably 30 to 180°C in temperature, for 1 minute to 1 hour, preferably 1 minute to 30 minutes, while the secondary kneading is usually performed at 10 to 100°C, preferably 20 to 60°C in temperature, for 1 minute to 1 hour, preferably 1 minute to 30 minutes.

The nitrile rubber composition of the present invention has a compound Mooney viscosity ($ML_{1+4}$, 100°C) of preferably 5 to 200, more preferably 10 to 150, particularly preferably 20 to 100. In particular, the nitrile rubber composition of the present invention contains the reactive silicone oil, so the compound Mooney viscosity can be made the above-mentioned range. Due to this, the nitrile rubber composition of the present invention is excellent in workability.

## Rubber Composition for Sliding Member Use

Next, the rubber composition for sliding member use of the present invention will be explained.

The rubber composition for sliding member use of the present invention contains a predetermined carboxyl group-containing rubber, a reactive silicone oil and at least one cross-linking agent as defined above.

## Carboxyl Group-Containing Rubber

The carboxyl group-containing rubber used in the present invention is rubber which contains carboxyl group-containing monomer units in a ratio of 0.1 to 20 wt%, which has monomer units which have unsaturated carbon-carbon double bonds in a content ratio of 20 wt% or less, and which has monomer units which have halogen atoms in a content ratio of 5 wt% or less. The carboxyl group-containing rubber used in the present invention can, for example, be obtained by copolymerizing a carboxyl group-containing monomer and copolymerizable monomer, then hydrogenating the unsaturated carbon-carbon double bonds in accordance with need.

The carboxyl group-containing monomer is not particularly limited so long as a monomer which has carbon-carbon double bonds and has at least one unsubstituted (free) carboxyl group which is not esterified.

As the carboxyl group-containing monomer used in the present invention, for example, an α,β-ethylenically unsaturated monocarboxylic acid monomer, α,β-ethylenically unsaturated polyvalent carboxylic acid monomer, α,β-ethylenically unsaturated dicarboxylic acid monoester monomer, etc. may be mentioned. These may be ones similar to the carboxyl group-containing nitrile rubber which forms the above-mentioned nitrile rubber composition of the present invention.

The carboxyl group-containing monomer may be used as a single type alone or as a plurality of types together. Among these as well, since the advantageous effects of the present invention become more remarkable, an α,β-ethylenically unsaturated dicarboxylic acid monoester monomer is preferable, a fumaric acid monoalkyl ester and maleic acid monoalkyl ester are more preferable, and mono n-butyl fumarate and mono n-butyl maleate are particularly preferable. Note that, the above-mentioned fumaric acid monoalkyl ester and maleic acid monoalkyl ester preferably have alkyl groups of 2 to 8 carbon atoms.

The content of carboxyl group-containing monomer units is 0.1 to 20 wt% with respect to the total monomer units, preferably 0.2 to 15 wt%, more preferably 0.5 to 10 wt%. If the content of carboxyl group-containing monomer units is too small, the obtained cross-linked rubber for sliding member use is liable to deteriorate in mechanical strength and compression set resistance, while conversely if too large, the rubber composition for sliding member use is liable to deteriorate in scorch stability or the obtained cross-linked rubber for sliding member use is liable to fall in fatigue resistance.

Further, the carboxyl group-containing rubber has a content ratio of monomer units which have unsaturated carbon-carbon double bonds of 20 wt% or less, preferably 15 wt% or less, more preferably 10 wt% or less. Here, "monomer units which have unsaturated carbon-carbon double bonds" mean units of a monomer which are present in the carboxyl group-containing rubber in a state having unsaturated carbon-carbon double bonds. That is, for example, 1,3-butadiene is present in the carboxyl group-containing rubber after polymerization as monomer units in a state having carbon-carbon double bonds so forms "monomer units which have unsaturated carbon-carbon double bonds". On the other hand, a monomer which has carbon-carbon double bonds before polymerization, but becomes a state not having carbon-carbon double bonds in the carboxyl group-containing rubber after polymerization is not included in "monomer units which have unsaturated carbon-carbon double bonds". Further, for example, a compound like 1,3-butadiene which has carbon-carbon double bonds after polymerization, but later is treated for saturation by for example a hydrogenation reaction etc. and, for example, like saturated 1,3-butadiene units, becomes a state not having carbon-carbon double bonds is similarly not included in " monomer units which have unsaturated carbon-carbon double bonds". If the monomer units which have unsaturated carbon-carbon double bonds are too high in content ratio, the obtained cross-linked rubber for sliding member use falls in heat resistance.

Further, the carboxyl group-containing rubber used in the present invention, from the viewpoint of environmental protection, has a content ratio of monomer units which have halogen atoms of 5 wt% or less, preferably 1 wt% or less, more preferably 0 wt%.

The carboxyl group-containing rubber has a polymer Mooney viscosity ($ML_{1+4}$, 100°C) of preferably 15 to 200, more preferably 20 to 150, particularly preferably 20 to 120. If the carboxyl group-containing rubber is too low in polymer Mooney viscosity, the obtained cross-linked rubber for sliding member use is liable to fall in mechanical properties, while conversely if too high, the rubber composition for sliding member use may fall in workability.

Further, the carboxyl group-containing rubber used in the present invention is not particularly limited so long as the above-mentioned monomer units are in the above-mentioned range, but from the viewpoint that the advantageous effects of the present invention become much more remarkable, as the carboxyl group-containing rubber, carboxyl group-containing highly saturated nitrile rubber which contains α,β-ethylenically unsaturated nitrile monomer units in a ratio of 5 to 60 wt% or carboxyl group-containing acrylic rubber which contains (meth) acrylic acid ester monomer units (meaning "acrylic acid ester monomer units and/or methacrylic acid ester monomer units", same below) in a ratio of 60 to 99.9 wt is preferable, and a carboxyl group-containing highly saturated nitrile rubber is more preferable.

The carboxyl group-containing highly saturated nitrile rubber is a carboxyl group-containing rubber which contains α,β-ethylenically unsaturated nitrile monomer units in 5 to 60 wt%. The carboxyl group-containing highly saturated nitrile rubber preferably has an iodine value of 90 or less.

As the carboxyl group-containing monomer which forms the carboxyl group-containing monomer units, ones similar to the carboxyl group-containing nitrile rubber which forms the above-mentioned nitrile rubber composition of the present invention may be used. Among these, since the effects of the present invention become more remarkable, an α,β-ethylenically unsaturated dicarboxylic acid monoester monomer is preferable, a fumaric acid monoalkyl ester and maleic acid monoalkyl ester are more preferable, and mono n-butyl fumarate and mono n-butyl maleate are particularly preferable. Note that, the above-mentioned fumaric acid monoalkyl ester and maleic acid monoalkyl ester preferably have alkyl groups with 2 to 8 carbon atoms.

Further, the content ratio of carboxyl group-containing monomer units in the carboxyl group-containing highly saturated nitrile rubber is 0.1 to 20 wt% with respect to the total monomer units, preferably 0.2 to 15 wt%, more preferably 0.5 to 10 wt%.

As the α,β-ethylenically unsaturated nitrile monomer which forms the α,β-ethylenically unsaturated nitrile monomer units, it is possible to use ones similar to the carboxyl group-containing nitrile rubber which forms the above-mentioned nitrile rubber composition of the present invention, but acrylonitrile and methacrylonitrile are preferable, while acrylonitrile is more preferable.

The content of α,β-ethylenically unsaturated nitrile monomer units is, with respect to the total monomer units, preferably 5 to 60 wt%, more preferably 10 to 55 wt%, furhtermore preferably 15 to 50 wt%. If the content of α,β-ethylenically unsaturated nitrile monomer units is too small, the obtained cross-linked rubber for sliding member use is liable to fall in oil resistance, while conversely if too large, the cold resistance may fall.

Further, the carboxyl group-containing highly saturated nitrile rubber used in the present invention is preferably one which is copolymerized conjugated diene monomers with the carboxyl group-containing monomer and α,β-ethylenically unsaturated nitrile monomer, from the viewpoint of the obtained cross-linked product expressing rubber elasticity.

As the conjugated diene monomers which form the conjugated diene monomer units, ones similar to the carboxyl group-containing nitrile rubber which forms the above-mentioned nitrile rubber composition of the present invention may be used, but 1,3-butadiene and isoprene are more preferable and 1,3-butadiene is particularly preferable.

The content of the conjugated diene monomer units is preferably 25 to 89.9 wt% with respect to the total monomer units, more preferably 30 to 79.8 wt%, furthermore preferably 30 to 69.5 wt%. If the content of the conjugated diene monomer units is too small, the obtained cross-linked rubber for sliding member use is liable to fall in rubber elasticity, while conversely if too large, the heat resistance and chemical stability may be impaired. Note that, the above-mentioned content of the conjugated diene monomer units is the content including parts which are hydrogenated (parts which are saturated) when, for example, the later explained hydrogenation is performed. Further, in the carboxyl group-containing highly saturated nitrile rubber used in the present invention, parts which are not hydrogenated in the conjugated diene monomer units (parts which are not saturated) correspond to the above-mentioned "monomer units which have unsaturated carbon-carbon double bonds", while parts which are hydrogenated in the conjugated diene monomer units (parts which are saturated) do not correspond to the above-mentioned "monomer units which have unsaturated carbon-carbon double bonds".

Further, the carboxyl group-containing highly saturated nitrile rubber used in the present invention is preferably one obtained by copolymerizing, in addition to the carboxyl group-containing monomer, α,β-ethylenically unsaturated nitrile monomer, and conjugated diene monomer, a (meth)acrylic acid ester (abbreviation for "methacrylic acid ester and acrylic acid ester", same below), from the viewpoint of improvement of the cold resistance.

As the (meth) acrylic acid ester monomer, methyl acrylate, ethyl acrylate, n-butyl acrylate, n-dodecyl acrylate, methyl methacrylate, ethyl methacrylate, and other (meth)acrylic acid esters which have alkyl groups with 1 to 18 carbon atoms; methoxymethyl acrylate, methoxyethyl acrylate, methoxyethyl methacrylate, and other (meth) acrylic acid esters which have alkoxyalkyl groups with 2 to 12 carbon atoms; α-cyanoethyl acrylate, α-cyanoethyl methacrylate, α-cyanobutyl methacrylate, and other (meth)acrylic acid esters which have cyanoalkyl groups with 2 to 12 carbon atoms; 2-hydroxyethyl acrylate, 2-hydroxypropyl acrylate, 2-hydroxyethyl methacrylate, and other (meth)acrylic acid esters which have hydroxyalkyl group with 1 to 12 carbon atoms; etc. may be mentioned, but among these as well, (meth)acrylic acid esters which have alkyl groups with 1 to 18 carbon atoms are preferable, (meth) acrylic acid esters which have alkyl groups with 2 to 8 carbon atoms are more preferable, and n-butyl acrylate is particularly preferable.

The content of the (meth)acrylic acid ester monomer units is preferably 5 to 50 wt% with respect to the total monomer units, more preferably 10 to 40 wt%, furthermore preferably 15 to 40 wt%.

Further, the carboxyl group-containing highly saturated nitrile rubber used in the present invention may be obtained by copolymerizing, in addition to the carboxyl group-containing monomer, α,β-ethylenically unsaturated nitrile monomer, conjugated diene monomer, and (meth)acrylic acid ester monomer, other monomers which can be copolymerized with these. As such other monomers, ethylene, an α-olefin monomer, aromatic vinyl monomer, α,β-ethylenically unsaturated carboxylic acid ester monomer (except one corresponding to the above-mentioned "carboxyl group-containing monomer" and " (meth) acrylic acid ester monomer"), copolymerizable anti-aging agent, etc. may be illustrated. As specific examples of these other monomers, ones similar to those of the carboxyl group-containing nitrile rubber which forms the above-mentioned nitrile rubber composition of the present invention may be mentioned.

These copolymerizable other monomers may be used in a plurality of types. The content of the units of the other monomers is preferably 50 wt% or less with respect to the total monomer units, more preferably 30 wt% or less, furhtermore preferably 10 wt% or less.

The carboxyl group-containing highly saturated nitrile rubber has an iodine value of preferably 90 or less, more preferably 60 or less, furthermore preferably 40 or less, particularly preferably 30 or less. By making the iodine value 90 or less, the obtained cross-linked rubber for sliding member use can be improved in heat resistance.

The carboxyl group-containing highly saturated nitrile rubber has a polymer Mooney viscosity ($ML_{1+4}$, 100°C)

of preferably 15 to 200, more preferably 20 to 150, furhtermore preferably 20 to 120. If the carboxyl group-containing highly saturated nitrile rubber has a polymer Mooney viscosity which is to low, the obtained cross-linked rubber for sliding member use is liable to fall in mechanical properties, while conversely if too high, the rubber composition for sliding member use may fall in workability.

The method of production of the carboxyl group-containing highly saturated nitrile rubber used in the present invention is not particularly limited, but it is preferable to produce it by using emulsion polymerization using an emulsifying agent so as to copolymerize the above-mentioned monomers to prepare a latex of copolymer rubber and then hydrogenate this. At the time of emulsion polymerization, in the same way as the carboxyl group-containing nitrile rubber which forms the above-mentioned nitrile rubber composition of the present invention, an emulsifying agent, polymerization initiator, molecular weight adjuster, or other usually used secondary polymerization materials may be used. Further, the amounts of the secondary polymerization materials which are used may be made ones similar to those of the carboxyl group-containing nitrile rubber which forms the above-mentioned nitrile rubber composition of the present invention.

Further, the carboxyl group-containing acrylic rubber used in the present invention is carboxyl group-containing rubber which contains (meth) acrylic acid ester monomer units in 60 to 99.9 wt%.

As the carboxyl group-containing monomer which forms the carboxyl group-containing monomer units, monomers similar to those illustrated in the explanation of the above-mentioned carboxyl group-containing rubber may be used. Since the advantageous effects of the present invention become more remarkable, an $\alpha,\beta$-ethylenically unsaturated dicarboxylic acid monoester monomer is preferable, a fumaric acid monoalkyl ester and maleic acid monoalkyl ester are more preferable, and mono n-butyl fumarate and mono n-butyl maleate are particularly preferable. Note that, the above-mentioned fumaric acid monoalkyl ester and maleic acid monoalkyl ester preferably have alkyl groups with 2 to 8 carbon atoms.

Further, the content ratio of carboxyl group-containing monomer units in the carboxyl group-containing acrylic rubber is 0.1 to 20 wt% witch respect to the total monomer units, preferably 0.2 to 15 wt%, more preferably 0.5 to 10 wt%.

As the (meth) acrylic acid ester monomer which forms the (meth)acrylic acid ester monomer units, a (meth)acrylic acid alkyl ester monomer, (meth)acrylic acid alkoxyalkyl ester monomer, etc. may be mentioned.

As the (meth)acrylic acid alkyl ester monomer, an ester of an alkanol with 1 to 8 carbon atoms and (meth) acrylic acid is preferable, specifically, methyl (meth)acrylate, ethyl (meth)acrylate, n-propyl (meth)acrylate, n-butyl (meth) acrylate, isopropyl (meth)acrylate, isobutyl (meth)acrylate, n-hexyl (meth)acrylate, 2-ethylhexyl (meth)acrylate, cyclohexyl (meth)acrylate, etc. may be mentioned, but ethyl acrylate and n-butyl acrylate are more preferable. Note that, the (meth) acrylic acid alkyl ester monomers may be used as single type alone or as a plurality of types together.

As the (meth) acrylic acid alkoxyalkyl ester monomer, an ester of an alkoxyalkanol with 2 to 8 carbon atoms and (meth) acrylic acid is preferable, specifically, methoxymethyl (meth) acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth) acrylate, 4-methoxybutyl (meth)acrylate, etc. may be mentioned, but 2-methoxyethyl acrylate and 2-ethoxyethyl acrylate are more preferable. Note that, the (meth)acrylic acid alkoxyalkyl ester monomer may be used as a single type alone or as a plurality of types together.

The content ratio of the (meth)acrylic acid ester monomer units in the carboxyl group-containing acrylic rubber is preferably 60 to 99.9 wt% with respect to the total monomer units, more preferably 75 to 99.8 wt%, furhtermore preferably 89.5 to 99.5 wt%. If the content of the (meth)acrylic acid ester monomer units is in the above-mentioned range, the advantageous effects of the present invention become much more remarkable.

Further, the carboxyl group-containing acrylic rubber used in the present invention may be obtained by copolymerizing, in addition to the carboxyl group-containing monomer and (meth)acrylic acid ester monomer, other monomers which can be copolymerized with these in a range not impairing the advantageous effects of the present invention. As such other monomers, an aromatic vinyl monomer, $\alpha,\beta$-ethylenically unsaturated nitrile monomer, etc. may be mentioned. The content of the units of other monomers in the carboxyl group-containing acrylic rubber is preferably 30 wt% or less, more preferably 20 wt% or less, particularly preferably 10 wt% or less.

As the aromatic vinyl monomer, styrene, $\alpha$-methylstyrene, divinylbenzene, etc. may be mentioned.

As the $\alpha,\beta$-ethylenically unsaturated nitrile monomer, acrylonitrile, methacrylonitrile, etc. may be illustrated.

The carboxyl group-containing acrylic rubber has a polymer Mooney viscosity ($ML_{1+4}$, 100°C) of preferably 15 to 200, more preferably 20 to 150, particularly preferably 20 to 120. If the carboxyl group-containing acrylic rubber has a polymer Mooney viscosity which is too low, the obtained cross-linked rubber for sliding member use is liable to fall in mechanical properties, while conversely if too high, the rubber composition for sliding member use may fall in workability.

The method of production of the carboxyl group-containing acrylic rubber is not particularly limited, but emulsion polymerization using an emulsifying agent is preferably used to copolymerize the above-mentioned monomers. At the time of emulsion polymerization, in the same way as the carboxyl group-containing nitrile rubber which forms the above-mentioned nitrile rubber composition of the present invention, an emulsifying agent, polymerization initiator, molecular weight adjuster, or other usually used secondary polymerization materials may be used. Further, the amounts of the secondary polymerization materials used may be made ones similar to those of the carboxyl group-containing nitrile

rubber which forms the above-mentioned nitrile rubber composition of the present invention.

Reactive Silicone Oil

The rubber composition for sliding member use of the present invention contains a reactive silicone oil as defined above in addition to the above-mentioned carboxyl group-containing rubber. The reactive silicone oil is silicone oil which has reactive groups. Those used in the above-mentioned nitrile rubber composition of the present invention may be used.

The reactive silicone oil used in the present invention acts as a plasticizer in the rubber composition for sliding member use of the present invention. Further, the reactive silicone oil used in the present invention forms chemical bonds with carboxyl group-containing rubber when cross-linking the rubber composition for sliding member use to obtain the cross-linked rubber for sliding member use.

For this reason, in the present invention, by adding a reactive silicone oil, in a rubber composition for sliding member use, it is possible to impart excellent workability by the action as a plasticizer. Further, the reactive silicone oil used in the present invention exhibits the effect of reducing the skin friction resistance even when cross-linking the rubber composition for sliding member use to obtain the cross-linked rubber for sliding member use. Further, the reactive silicone oil used in the present invention forms chemical bonds with the carboxyl group-containing rubber when cross-linking the rubber composition for sliding member use to obtain the cross-linked rubber for sliding member use, whereby the effect of reduction of the skin friction resistance becomes even more remarkable.

Further, in the rubber composition for sliding member use of the present invention, the content of the reactive silicone oil is preferably 0.1 to 200 parts by weight with respect to 100 parts by weight of the carboxyl group-containing rubber, more preferably 1 to 100 parts by weight, furthermore preferably 2 to 50 parts by weight, particularly preferably 2 to 30 parts by weight. If the content of the reactive silicone oil is too small, the advantageous effects due to blending in the reactive silicone oil become difficult to obtain. On the other hand, if too large, the obtained cross-linked rubber is liable to fall in physical properties (for example, strength and elongation).

Other Compounding Agents

The rubber composition for sliding member use of the present invention further contains a cross-linking agent. As the cross-linking agent, it is possible to use that used in above-mentioned nitrile rubber composition. Note that, as explained above, the reactive silicone oil, depending on its type, sometimes acts as a cross-linking agent. Therefore, in the rubber composition for sliding member use of the present invention, the amount of the cross-linking agent is preferably suitably determined in accordance with the type and amount of the reactive silicone oil which is used, but the amount of the cross-linking agent is preferably 0.1 to 50 parts by weight with respect to 100 parts by weight of the carboxyl group-containing rubber, more preferably 0.2 to 10 parts by weight, furthermore preferably 0.2 to 5 parts by weight.

Further, the rubber composition for sliding member use of the present invention preferably further contains a basic cross-linking accelerator. By further including a basic cross-linking accelerator, the advantageous effects of the present invention become even more remarkable. As the basic cross-linking accelerator, one similar to that in the above-mentioned nitrile rubber composition may be used. The amount may also be made a similar one.

Further, the rubber composition for sliding member use of the present invention may have blended into it other compounding agents which are usually used in the rubber processing field in addition to the above-mentioned ingredients. As such compounding agents, for example, a reinforcing agent, filler, antioxidant, photostabilizer, scorch preventer, processing aid, slip agent, tackifier, lubricant, flame retardant, antifungal agent, antistatic agent, coloring agent, silane coupling agent, cross-linking aid, cross-linking retardant, foam agent, etc. may be mentioned. As the amounts of these compounding agents, amounts according to the purposes of inclusion may be suitably employed.

Note that, the rubber composition for sliding member use of the present invention may have rubber other than the above-mentioned carboxyl group-containing rubber blended into it in a range not impairing the advantageous effects of the present invention.

As such rubber, styrene-butadiene copolymer rubber, polybutadiene rubber, ethylene-propylene copolymer rubber, ethylene-propylene-diene ternary copolymer rubber, urethane rubber, silicone rubber, natural rubber, polyisoprene rubber, etc. may be mentioned.

The amount of the rubber other than carboxyl group-containing rubber in the rubber composition for sliding member use of the present invention when blending it in is preferably 60 part by weight or less with respect to 100 parts by weight of the carboxyl group-containing rubber, more preferably 30 part by weight or less, furthermore preferably 10 part by weight or less.

Further, the rubber composition for sliding member use of the present invention may have a plasticizer blended into it in addition to the above-mentioned reactive silicone oil in a range not impairing the advantageous effects of the present invention. The plasticizer is not particularly limited. A plasticizer which is usually used in the rubber processing

field may also be used. The amount of the plasticizer is preferably 0 to 20 parts by weight with respect to 100 parts by weight of the carboxyl group-containing rubber.

The rubber composition for sliding member use of the present invention is prepared by mixing the above-mentioned ingredients preferably in a nonaqueous system. The conditions when mixing the ingredients may be made ones similar to the above-mentioned nitrile rubber composition of the present invention.

Cross-Linked Rubber and Cross-Linked Rubber for Sliding Member Use

The cross-linked rubber of the present invention is obtained by cross-linking the above-mentioned nitrile rubber composition of the present invention. Further, the cross-linked rubber for sliding member use of the present invention is obtained by cross-linking the above-mentioned rubber composition for sliding member use of the present invention.

The cross-linked rubber and the cross-linked rubber for sliding member use of the present invention may be produced by using the nitrile rubber composition and rubber composition for sliding member use of the present invention, shaping it by for example a molding machine corresponding to the desired shape such as an extruder, injection molding machine, press, roll, etc., heating it to perform a cross-linking reaction, and fixing the shape as a cross-linked product. In this case, it is possible to perform the cross-linking after the preliminary shaping or perform the cross-linking simultaneously with the shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 12 hours, particularly preferably 3 minutes to 6 hours.

Further, depending on the shape, size, etc. of the cross-linked rubber and the cross-linked rubber for sliding member use, sometimes even if the surface is cross-linked, the inside will not be sufficiently cross-linked, so the rubber may be further heated for secondary cross-linking.

As the heating method, press heating, steam heating, oven heating, hot air heating, and other general methods which are used for cross-linking rubber may be suitably selected.

The thus obtained cross-linked rubber of the present invention is obtained by using the above-mentioned nitrile rubber composition of the present invention, so is excellent in normal physical properties and cold resistance and has little changes in physical properties (for example, changes in hardness or cold resistance) even when used in contact with oil.

Further, the thus obtained cross-linked rubber for sliding member use of this present invention is obtained by using the above-mentioned rubber composition for sliding member use of the present invention, so is low in skin friction resistance.

For this reason, the cross-linked rubber of the present invention can be used, taking advantage of the above characteristics, for O-rings, packings, diaphragms, oil seals, shaft seals, bearing seals, wellhead seals, air compressor seals, seals for sealing the chlorofluorocabon or fluorohydrocarbons or carbon dioxide used for cooling apparatuses of air-conditioners or compressors for cooling machines for air-conditioning systems, seals for sealing supercritical carbon dioxide or subcritical carbon dioxide used for washing media for precision washing, seals for roller devices (roller bearings, automobile hub units, automobile water pumps, linear guide devices, ball and screws, etc.), valves and valve seats, BOP (blow out preventers), blatters, and other various sealing members; and intake manifold gaskets attached to connecting parts of intake manifolds and cylinder heads, cylinder head gaskets attached to connecting parts of cylinder blocks and cylinder heads, rocker cover gaskets attached to connecting parts of rocker covers and cylinder heads, oil pan gaskets attached to connecting parts of oil pans and cylinder blocks or transmission cases, gaskets for fuel cell separators attached between a pair of housings sandwiching a unit cell provided with anode, electrolyte plates, and cathodes, gaskets for top covers of hard disk drives, and other various types of gaskets; printing rolls, ironmaking rolls, papermaking rolls, industrial rolls, office equipment rolls, and other various types of rolls; flat belts (film core flat belts, cord flat belts, maltilayer flat belts, single piece flat belts, etc.), V-belts (wrapped V-belts, low edge V-belts, etc.), V-ribbed belts (single V-ribbed belts, double V-ribbed belts, wrapped V-ribbed belts, back surface rubber V-ribbed belts, etc.), CVT belts, timing belts, toothed belts, conveyor belts, oil immersed belts, and other various types of belts; fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, flowlines, and other various types of hoses; CVJ boots, propeller shaft boots, constant velocity joint boots, rack and pinion boots, and other various types of boots; cushion materials, dynamic dampers, rubber couplings, air springs, vibration proofing materials, and other damping material rubber parts; dust covers, car interior members, tires, covered cables, shoe soles, electromagnetic wave shields, binders for flexible printed circuit boards and other binders, fuel cell separators, and also other broad applications in the fields of cosmetics and pharmaceuticals, fields in contact with food, the electronics field, etc. Among these as well, the cross-linked rubber of the present invention can be suitably used for seal materials, belts, hoses, or gaskets.

Further, the cross-linked rubber for sliding member use of the present invention can be suitably used, taking advantage of the above-mentioned characteristics, for applications of seal members of sliding parts of varius systems. Specifically, bearing seals, hub seals, shaft seals, oil seals, shock absorber seals, cylinder seals, wellhead seals, air

compressor seals, seals for rolling systems (roller bearings, automotive hub units, automotive water pumps, linear guide systems, and ball screws, etc.), etc.

EXAMPLES

Below, the present invention will be explained based on more detailed examples, but the present invention is not limited to these examples. Note that, below, "parts" are based on weight unless otherwise indicated. Further, the tests and evaluations were performed as follows.

Composition of Carboxyl Group-Containing (Highly Saturated)

Nitrile Rubber

The content ratios of the monomer units which form the carboxyl group-containing (highly saturated) nitrile rubber were measured by the following method.

That is, the content ratio of mono n-butyl maleate units was calculated by adding 2-butanone 100 ml to 2 mm square carboxyl group-containing (highly saturated) nitrile rubber 0.2 g and stirring for 16 hours, then adding ethanol 20 ml and water 10 ml and, while stirring, using a 0.02N hydrous ethanol solution of potassium hydroxide for titration at room temperature by Thymolphthalein as an indicator to thereby find the number of moles of the carboxyl group to the carboxyl group-containing (highly saturated) nitrile rubber 100 g, and converting the number of moles which were found to the amount of mono n-butyl maleate units.

The content ratios of 1,3-butadiene units and saturated butadiene units were calculated by using carboxyl group-containing (highly saturated) nitrile rubber and measuring the iodine values before a hydrogen addition reaction and after a hydrogen addition reaction (based on JIS K 6235).

The content ratio of acrylonitrile units was calculated by measuring the content of nitrogen in the carboxyl group-containing (highly saturated) nitrile rubber by the Kjeldahl method in accordance with JIS K 6383.

The content ratio of n-butyl acrylate units was calculated as the remaining ingredients with respect to the above-mentioned monomer units.

Iodine Value

The iodine value of the carboxyl group-containing (highly saturated) nitrile rubber was measured in accordance with JIS K 6235.

Mooney Viscosity (Polymer Mooney, Compound Mooney)

The Mooney viscosity (polymer Mooney, compound Mooney) of the carboxyl group-containing (highly saturated) nitrile rubber, carboxyl group-containing acrylic rubber, and rubber composition was measured in accordance with JIS K 6300-1 (units: [$ML_{1+4}$, 100°C]).

Normal Physical Properties (Tensile Strength, Elongation, Hardness)

The rubber composition was placed in a vertical 15 cm, horizontal 15 cm, depth 0.2 cm mold and press formed by pressing by a press pressure of 10 MPa at 170°C for 20 minutes to obtain a sheet-shaped cross-linked product. Next, the obtained cross-linked product was transferred to a Geer type oven and secondarily cross-linked at 170°C for 4 hours. The obtained sheet-shaped cross-linked rubber was punched to a No. 3 dumbbell shape to prepare a test piece. Further, the obtained test piece was used to measure the tensile strength and elongation of the cross-linked rubber in accordance with JIS K 6251 and, further, the hardness of the cross-linked rubber using a Durometer hardness tester (Type A) in accordance with JIS K 6253.

Cold Resistance Test (TR Test)

The same procedure as in the evaluation of the above-mentioned normal physical properties was performed to obtain sheet-shaped cross-linked rubber, then the cold resistance was measured by a TR test (low temperature elastic recovery test) in accordance with JIS K 6261. TR10 (units: °C) is the indicator of the cold resistance. The lower this value, the better the cold resistance can be judged.

Oil Immersion Test (IRM901, IRM903)

The same procedure as in the evaluation of the above-mentioned normal physical properties was performed to obtain sheet-shaped cross-linked rubber, then the cross-linked product was immersed in test oil adjusted to 150°C (IRM901 and IRM903) for 72 hours in accordance with JIS K6258 to thereby perform an oil immersion test.

Note that, in the oil immersion test, the volume swelling degree ΔV after oil immersion, the hardness after oil immersion, the change in hardness before and after oil immersion, the TR10 after oil immersion, and the change in TR10, that is, ΔTR10, before and after oil immersion, were evaluated.

The volume swelling degree ΔV after oil immersion (units: %) was obtained by measuring the volume of the cross-linked rubber before and after oil immersion and calculating "ΔV=([volume after oil immersion - volume before oil immersion]/volume before oil immersion) x 100".

Further, in the evaluations of the hardness after oil immersion, the change in hardness before and after oil immersion, the TR10 after oil immersion, and the change ΔTR10 in TR10 before and after oil immersion, as the cross-linked rubber after oil immersion, one which was vacuum dried at 100°C for 48 hours then sufficiently cooled in an atmosphere of a temperature 23°C and a humidity of 50% was used.

The hardness after oil immersion was determined by measuring the hardness of the cross-linked rubber after oil immersion by the above-mentioned method. Further, the change in hardness before and after oil immersion was determined by calculating the "change in hardness = hardness after oil immersion - hardness before oil immersion" from the hardnesses before and after oil immersion.

The TR10 after oil immersion was determined by measuring the TR10 of the cross-linked rubber after oil immersion by the above-mentioned method. Further, the change ΔTR10 of TR10 before and after oil immersion was calculated from the TR10 of the cross-linked rubber before and after oil immersion in accordance with "ΔTR10 = TR10 after oil immersion - TR10 before oil immersion".

Compression Set Test

Using an inside diameter 30 mm, ring diameter 3 mm mold, a rubber composition was cross-linked at 170°C for 20 minutes by a press pressure of 10 MPa, then was secondarily cross-linked at 170°C for 4 hours to obtain an O-ring shaped test piece. Further, the obtained O-ring shaped test piece was used to measure the O-ring compression set in accordance with JIS K 6262 under conditions of the O-ring shaped test piece sandwiched between two flat surfaces at a distance compressed 25% in the ring thickness direction held at 150°C for 168 hours. The smaller this value, the better the compression set resistance.

Skin Friction Resistance Test

The same procedure as in the evaluation of the above-mentioned normal physical properties was performed to obtain sheet-shaped pressed cross-linked product. The obtained sheet-shaped pressed cross-linked product was measured for skin friction resistance by using a Heidon type surface property measuring device (product name "HEIDON-14D", made by Shinto Scientific Co., Ltd.) Note that, the measurement was performed by measuring the frictional force F (units: gf) applied to a dynamic strain amplifier of the Heidon type surface property measuring device when using a ball indenter (SUSφ10) as a measurement tool and making the sheet-shaped pressed cross-linked product move horizontally under conditions of a test load of 100 g (vertical load N) and a test velocity of 50 mm/min. The following formula was used as the basis to calculate the friction coefficient μ.

$$\mu = F/N$$

In this test, the values of the friction coefficient μ were continuously recorded from the state where the sheet-shaped pressed cross-linked product was at rest to when it become constant at the test velocity. The maximum value of the friction coefficient μ was defined as the "static friction coefficient", while the value when the friction coefficient μ became constant was defined as the "dynamic friction coefficient" .

The smaller the values of the "static friction coefficient" and the "dynamic friction coefficient", the lower the skin friction resistance and the better the sliding properties that can be judged.

Synthesis Example 1 (Production of Carboxyl Group-Containing Nitrile Rubber (R1) and Carboxyl Group-Containing Highly Saturated Nitrile Rubber (R2))

To a reactor, ion exchanged water 180 parts, concentration 10 wt% sodium dodecylbenzene sulfonate aqueous solution 25 parts, acrylonitrile 37.0 parts, mono n-butyl maleate 4 parts, and t-dodecyl mercaptan (molecular weight adjuster) 0.5 part were successively charged. The inside gas was replaced with nitrogen three times, then 1,3-butadiene 57 parts was charged. The reactor was held at 5°C, then cumen hydroperoxide (polymerization initiator) 0.1 part was charged. While stirring, the polymerization reaction was continued. At the points of time in the middle when the polymerization conversion rate reached 40% and 60%, 1 part of mono n-butyl maleate was added and the polymerization reaction continued for 16 hours. Next, concentration 10 wt% hydroquinone aqueous solution (polymerization terminator) 0.1 part was added to stop the polymerization reaction, then a water temperature 60°C rotary evaporator was used to remove the residual monomers and obtain a latex (L1) of carboxyl group-containing nitrile rubber (solid content concentration: about 30 wt%).

Next, two volumes of methanol was added to the obtained latex (L1) to coagulate it, then the result was filtered to take out the solids (crumbs). The crumbs were vacuum dried at 60°C for 12 hours to thereby obtain carboxyl group-containing nitrile rubber (R1). The carboxyl group-containing nitrile rubber (R1) had a polymer Mooney viscosity [$ML_{1+4}$, 100°C] of 12. Further, the contents of the monomer units which formed the obtained carboxyl group-containing nitrile rubber (R1) were acrylonitrile units 36.7 wt%, mono n-butyl maleate units 5.7 wt%, and 1,3-butadiene units 57.6 wt%.

Next, to the autoclave, a palladium catalyst (solution of 1 wt% palladium acetate acetone solution and same weight of ion exchanged water mixed together) was added to give a palladium content, by weight ratio, of 1,000 ppm with respect to the dry weight of rubber which is contained in the latex (L1) and the mixture was subjected to a hydrogen addition reaction at a hydrogen pressure of 3 MPa and temperature of 50°C for 6 hours to obtain a latex (L2) of carboxyl group-containing highly saturated nitrile rubber.

Further, two volumes of methanol was added to the obtained latex (L2) to coagulate it, then the result was filtered to take out the solids (crumbs). The crumbs were vacuum dried at 60°C for 12 hours to thereby obtain carboxyl group-containing highly saturated nitrile rubber (R2). The carboxyl group-containing highly saturated nitrile rubber (R2) had an iodine value of 6.5 and a polymer Mooney viscosity [$ML_{1+4}$, 100°C] of 40. The content ratio of monomer units forming the carboxyl group-containing highly saturated nitrile rubber (R2) was acrylonitrile units 35.7 wt%, mono n-butyl maleate units 5.7 wt%, and 1,3-butadiene units (including hydrogenated parts) 58.6 wt%.

Example 1

Using a Bambury mixer, to 100 parts of carboxyl group-containing highly saturated nitrile rubber (R2) obtained at Synthesis Example 1, MT carbon (product name "Thermax MT", made by Cancarb, carbon black) 200 parts, side-chain type amino-modified silicone oil (product name "KF-868", made by ShinEtsu Chemical Co., Ltd., dynamic viscosity at 25°C: 90 $mm^2/s$, functional group equivalent: 8800 g/mol, the compound of the above-mentioned formula (1) where $X^1=NH_2$) 49.5 parts, polyoxyethylenestearyl ether phosphoric acid (product name "Phosphanol RL-210", made by Toho Chemical, processing aid) 1 part, and 4,4'-di-($\alpha$,$\alpha$-dimethylbenzyl)diphenylamine (product name "Naugard 445", made by Crompton, anti-aging agent) 1.5 parts were added and mixed, then the mixture was transferred to a roll and mixed and kneaded with 1,3-di-o-tolylguanidine (product name "Noccelar DT", made by Ouchi Shinko Chemical Industrial, basic cross-linking accelerator) 2 parts and hexamethylenediamine carbamate (product name "Diak#1", made by Dupont Dow Elastomer, polyamine-based cross-linking agent falling under aliphatic polyvalent amines) 2.2 parts to prepare a rubber composition.

Further, the above-mentioned methods were used to evaluate and perform the compound Mooney viscosity, normal physical properties, cold resistance test, and oil immersion test. The results are shown in Table 1.

Example 2 (for reference and/or comparison only)

In Example 1, except for using instead of the side-chain type amino-modified silicone oil 49.5 parts, a two-end type amino-modified silicone oil (product name "X-22-1618", made by Shin-Etsu Chemical Co., Ltd., dynamic viscosity at 25°C: 55 $mm^2/s$, functional group equivalent: 1500 g/mol, the compound of the above-mentioned formula (7)) 49.5 parts and by not using hexamethylenediamine carbamate, the same procedure was followed as in Example 1 to prepare a rubber composition and evaluate the same. The results are shown in Table 1.

Example 3 (for reference and/or comparison only)

In Example 2, except for using instead of the 1,3-di-o-tolylguanidine 2 parts, 1,8-diazabicyclo[5,4,0]-undecene-7 (DBU) (product name "RHENOGRAN XLA-60 (GE2014)", made by RheinChemie, DBU 60% (including part forming

zinc dialkyl diphosphate salt) and acrylic acid polymer and dispersant 40%, basic cross-linking accelerator) 4 parts, the same procedure was followed as in Example 2 to prepare a rubber composition and evaluate the same. The results are shown in Table 1.

Example 4 (for reference and/or comparison only)

In Example 2, except for using instead of the carboxyl group-containing highly saturated nitrile rubber (R2) 100 parts, the carboxyl group-containing nitrile rubber (R1) 100 parts, the same procedure was followed as in Example 2 to prepare a rubber composition and evaluate the same. The results are shown in Table 1.

Example 5

In Example 1, except for using instead of the side-chain type amino-modified silicone oil 49.5 parts, a two-end type epoxy-modified silicone oil (product name "X-22-163B", made by ShinEtsu Chemical Co., Ltd., dynamic viscosity at 25°C: 60 $mm^2/s$, functional group equivalent: 1750 g/mol, the compound of the above-mentioned formula (2) where $X^2$ and $X^3$=epoxy ethyl) 49.5 parts and changing the amount of use of hexamethylenediamine carbamate from 2.2 parts to 0.4 part, the same procedure was followed as in Example 1 to prepare a rubber composition and evaluate the same. The results are shown in Table 1.

Example 6

In Example 1, except for using instead of the side-chain type amino-modified silicone oil 49.5 parts, a two-end type mercapto-modified silicone oil (product name "X-22-167B", made by ShinEtsu Chemical Co., Ltd., dynamic viscosity at 25°C: 55 $mm^2/s$, functional group equivalent: 1670 g/mol, the compound of the above-mentioned formula (2) where $X^2$ and $X^3$=-SH) 49.5 parts and changing the amount of use of hexamethylenediamine carbamate from 2.2 parts to 0.3 part, the same procedure was followed as in Example 1 to prepare a rubber composition and evaluate the same. The results are shown in Table 1.

Example 7

In Example 1, except for using instead of the side-chain type amino-modified silicone oil 49.5 parts, a two-end type carboxyl-modified silicone oil (product name "X-22-162C", made by ShinEtsu Chemical Co., Ltd., dynamic viscosity at 25°C: 220 $mm^2/s$, functional group equivalent: 2300 g/mol, the compound of the above-mentioned formula (2) where $X^2$ and $X^3$=-C(=O)OH) 49.5 parts and changing the amount of use of hexamethylenediamine carbamate from 2.2 parts to 5.2 parts, the same procedure was followed as in Example 1 to prepare a rubber composition and evaluate the same. The results are shown in Table 1.

Example 8 (for reference and/or comparison only)

In Example 2, except for using instead of the two-end type amino-modified silicone oil 49.5 parts, a single-end type epoxy-modified silicone oil (product name "X-22-173DX", made by ShinEtsu Chemical Co., Ltd., dynamic viscosity at 25°C: 65 $mm^2/s$, functional group equivalent: 4500 g/mol, the compound of the above-mentioned formula (4) where $X^7$=epoxy ethyl) 49.5 parts, not using 1,3-di-o-tolylguanidine, and using, as the cross-linking agent, 1,3-bis(t-butyl peroxyisopropyl)benzene (organic peroxide) 40% product (made by GEO Specialty Chemicals Inc., Vul-Cup 40KE) 8 parts, the same procedure was followed as in Example 2 to prepare a rubber composition and evaluate the same. The results are shown in Table 1.

Example 9 (for reference and/or comparison only)

In Example 8, except for using instead of the single-end type epoxy-modified silicone oil 49.5 parts, a side-chain type amino-modified silicone oil (product name "KF-868", made by ShinEtsu Chemical Co., Ltd., dynamic viscosity at 25°C: 90 $mm^2/s$, functional group equivalent: 8800 g/mol, the compound of the above-mentioned formula (1) where $X^1$= $NH_2$) 49.5 parts, the same procedure was followed as in Example 8 to prepare a rubber composition and evaluate the same. The results are shown in Table 1.

Comparative Example 1

In Example 1, except for not using the side-chain type amino-modified silicone oil and changing the amount of

use of hexamethylenediamine carbamate from 2.2 parts to 2.6 parts, the same procedure was followed as in Example 1 to prepare a rubber composition and evaluate the same. The results are shown in Table 1.

Comparative Example 2

In Example 1, except for using instead of the side-chain type amino-modified silicone oil 49.5 parts, tri-2-ethylhexyl trimellitate (product name "ADK Cizer C-8", made by ADEKA, plasticizer) 49.5 parts and changing the amount of use of hexamethylenediamine carbamate from 2.2 parts to 2.6 parts, the same procedure was followed as in Example 1 to prepare the rubber composition and evaluate the same. The results are shown in Table 1.

Table 1

Table 1

| | | Examples | | | | | | | | | Comp. ex. | |
|---|---|---|---|---|---|---|---|---|---|---|---|---|
| | | 1 | 2 | 3 | 4 | 5 | 6 | 7 | 8 | 9 | 1 | 2 |
| Formulation | | | | | | | | | | | | |
| Carboxyl group-containing nitrile rubber (R1) | (parts) | | | | 100 | | | | | | | |
| Carboxyl group-containing highly saturated nitrile rubber (R2) | (parts) | 100 | 100 | 100 | | 100 | 100 | 100 | 100 | 100 | 100 | 100 |
| Carbon black | (parts) | 200 | 200 | 200 | 200 | 200 | 200 | 200 | 200 | 200 | 200 | 200 |
| 4,4'-di-(α,α-dimethylbenzyl) diphenylamine | (parts) | 1.5 | 1.5 | 1.5 | 1.5 | 1.5 | 1.5 | 1.5 | 1.5 | 1.5 | 1.5 | 1.5 |
| Polyoxyethylenestearyl ether phosphoric acid | (parts) | 1 | 1 | 1 | 1 | 1 | 1 | 1 | 1 | 1 | 1 | 1 |
| 1,3-bis(t-butylperoxyisopropyl)benzene (40% product) | (parts) | | | | | | | | 8 | 8 | | |
| Hexamethylenediamine carbamate | (parts) | 2.2 | | | | 0.4 | 0.3 | 5.2 | | | 2.6 | 2.6 |
| Side chain-type amino-modified silicone oil | (parts) | 49.5 | | | | | | | | 49.5 | | |
| Two-end type amino-modified silicone oil | (parts) | | 49.5 | 49.5 | 49.5 | | | | | | | |
| Two-end type epoxy-modified silicone oil | (parts) | | | | | 49.5 | | | | | | |
| Two-end type mercapto-modified silicone oil | (parts) | | | | | | 49.5 | | | | | |
| Two-end type carboxyl-modified silicone oil | (parts) | | | | | | | 49.5 | | | | |
| Single-end type epoxy-modified silicone oil | (parts) | | | | | | | | 49.5 | | | |
| Tri-2-ethylhexyl trimellitate | (parts) | | | | | | | | | | | 49.5 |
| 1,3-di-o-tolylguanidine | (parts) | 2 | 2 | | 2 | 2 | 2 | 2 | | | 2 | 2 |
| 1,8-diazabicyclo[5,4,0]-undecene-7 (60%) | (parts) | | | 4 | | | | | | | | |
| Compound Mooney viscosity | | 48 | 41 | 42 | 16 | 50 | 49 | 51 | 53 | 49 | 253 | 55 |
| Normal physical properties | | | | | | | | | | | | |
| Tensile strength | (MPa) | 15.4 | 15.2 | 15.9 | 16.1 | 18.5 | 13.7 | 11.6 | 17.9 | 15.8 | 16.8 | 16.3 |
| Elongation | (%) | 200 | 210 | 200 | 170 | 220 | 320 | 500 | 230 | 210 | 160 | 190 |
| Hardness (DURO A) | | 82 | 84 | 82 | 82 | 80 | 81 | 80 | 82 | 80 | 91 | 76 |
| Cold resistance test (constant rate of extension test) | | | | | | | | | | | | |
| TR10 | (°C) | -23 | -22 | -22 | -21 | -22 | -24 | -21 | -21 | -23 | -19 | -25 |
| Oil immersion test (IRM901, 150°C, 72 hours) | | | | | | | | | | | | |

(continued)

| | | Examples | | | | | | | | | Comp. ex. | |
|---|---|---|---|---|---|---|---|---|---|---|---|---|
| | | 1 | 2 | 3 | 4 | 5 | 6 | 7 | 8 | 9 | 1 | 2 |
| Volume swelling degree ΔV | (%) | -0.3 | -1.5 | -1.6 | -0.3 | -0.1 | -0.1 | -0.2 | -0.5 | -0.3 | -0.5 | -17.8 |
| Hardness after oil immersion (DURO A) | | 83 | 84 | 83 | 83 | 82 | 82 | 81 | 82 | 82 | 92 | 92 |
| Change of hardness before and after oil immersion (DURO A) | | 1 | 0 | 1 | 1 | 2 | 1 | 1 | 0 | 2 | 1 | 16 |
| TR10 after oil immersion | (°C) | -23 | -21 | -22 | -22 | -21 | -23 | -21 | -21 | -23 | -21 | -18 |
| Change ΔTR10 of TR10 before and after oil immersion | (°C) | 0 | 1 | 0 | -1 | 1 | 1 | 0 | 0 | 0 | -2 | 7 |
| Oil immersion test (IRM903, 150°C, 72 hours) | | | | | | | | | | | | |
| Volume swelling degree ΔV | (%) | 8.0 | 13.0 | 13.4 | 8.0 | 12.1 | 11.8 | 10.4 | 10.9 | 11.7 | 7.3 | -10.3 |
| Hardness after oil immersion (DURO A) | | 83 | 86 | 85 | 83 | 82 | 82 | 80 | 82 | 82 | 92 | 92 |
| Change of hardness before and after oil immersion (DURO A) | | 1 | 2 | 3 | 1 | 2 | 1 | 0 | 0 | 2 | 1 | 16 |
| TR10 after oil immersion | (°C) | -22 | -21 | -22 | -21 | -22 | -23 | -21 | -21 | -22 | -20 | -17 |
| Change ΔTR10 of TR10 before and after oil immersion | (°C) | 1 | 1 | 0 | 0 | 0 | 1 | 0 | 0 | 1 | -1 | 8 |

From Table 1, when blending a reactive silicone oil into a carboxyl group-containing nitrile rubber (R1) or carboxyl group-containing highly saturated nitrile rubber (R2), the result becomes low in compound Mooney viscosity, excellent in workability, has excellent normal physical properties and cold resistance, and, further, has a small change in volume, change in hardness, and change in TR10 of indicator of cold resistance due to immersion in oil, and is excellent in oil resistance (Examples 1 to 9).

On the other hand, when not blending the reactive silicone oil, the result becomes high in compound Mooney viscosity and inferior in workability (Comparative Example 1). Further, when using tri-2-ethylhexyl trimellitate as the plasticizer instead of the reactive silicone oil, the result was large in each of change in volume, change in hardness, and change in TR10 of indicator of cold resistance due to immersion in oil and was inferior in oil resistance (Comparative Example 2).

Example 10

Using a Bambury mixer, to 100 parts of carboxyl group-containing highly saturated nitrile rubber (R2) obtained at Synthesis Example 1, silica (product name "Nipsil ER", made by Toso Silica) 50 parts, tri-2-ethylhexyl trimellitate (product name "ADK Cizer C-8", made by ADEKA, plasticizer) 5 parts, 4,4'-di-($\alpha$,$\alpha$-dimethylbenzyl)diphenylamine (product name "Nocrac CD", made by Ouchi Shinko Chemical Industrial, anti-aging agent) 1.5 parts, stearic acid 1 part, polyoxyethylene stearyl ether phosphoric acid (product name "Phosphanol RL-210", made by Toho Chemical, processing aid) 1 part, 3-aminopropyl triethoxysilane (product name "Z-6011", made by Toray Dow Corning, silane coupling agent) 1 part, and, further, side-chain type amino-modified silicone oil (product name "KF-868", made by ShinEtsu Chemical Co., Ltd., dynamic viscosity at 25°C: 90 $mm^2/s$, functional group equivalent: 8800 g/mol, the compound of the above-mentioned formula (1) where $X^1=NH_2$) 5 parts were added and mixed at 50°C for 5 minutes. Next, the obtained mixture was transferred to a 50°C roll and mixed and kneaded with hexamethylenediamine carbamate (product name "Diak#1", made by Dupont Dow Elastomer, polyamine-based cross-linking agent falling under aliphatic polyvalent amines) 2.55 parts, and 1,8-diazabicyclo[5,4,0]-undecene-7 (DBU) (product name "RHENOGRAN XLA-60 (GE2014)", made by RheinChemie, DBU 60% (including part forming zinc dialkyl diphosphate salt), basic cross-linking accelerator) 4 parts to prepare a rubber composition.

Further, using the obtained rubber composition, the above-mentioned methods were used to evaluate the compound Mooney viscosity, normal physical properties, oil immersion test (IRM901, volume swelling degree $\Delta V$ after oil immersion), compression set test, cold resistance test, and skin friction resistance test. The results are shown in Table 2.

Example 11

In Example 10, except for changing the amount of use of the side-chain type amino-modified silicone oil from 5 parts to 10 parts and changing the amount of use of hexamethylenediamine carbamate from 2.55 parts to 2.51 parts, the same procedure was followed as in Example 10 to prepare a rubber composition and evaluate the same. The results are shown in Table 2.

Example 12

In Example 10, except for changing the amount of use of the side-chain type amino-modified silicone oil from 5 parts to 15 parts and changing the amount of use of hexamethylenediamine carbamate from 2.55 parts to 2.46 parts, the same procedure was followed as in Example 10 to prepare a rubber composition and evaluate the same. The results are shown in Table 2.

Example 13

In Example 10, except for changing the amount of use of the side-chain type amino-modified silicone oil from 5 parts to 10 parts, changing the amount of use of 3-aminopropyl triethoxysilane from 1 part to 0 part, and furthermore changing the amount of use of hexamethylenediamine carbamate from 2.55 parts to 2.51 parts, the same procedure was followed as in Example 10 to prepare a rubber composition and evaluate the same. The results are shown in Table 2.

Example 14

In Example 10, except for changing the amount of use of the side-chain type amino-modified silicone oil from 5 parts to 10 parts, changing the amount of use of hexamethylenediamine carbamate from 2.55 parts to 2.51 parts, and further adding stearyl alcohol (made by Wako Pure Chemical Industries, $C_{18}$ saturated alcohol) 5 parts, the same procedure was followed as in Example 10 to prepare a rubber composition and evaluate the same. The results are

shown in Table 2.
Table 2

Table 2

| | | Examples | | | | |
|---|---|---|---|---|---|---|
| | | 10 | 11 | 12 | 13 | 14 |
| Formulation | | | | | | |
| Carboxyl group-containing highly saturated nitrile rubber (R2) | (parts) | 100 | 100 | 100 | 100 | 100 |
| Silica | (parts) | 50 | 50 | 50 | 50 | 50 |
| Tri-2-ethylhexyl trimellitate | (parts) | 5 | 5 | 5 | 5 | 5 |
| 4,4'-di-($\alpha$,$\alpha$-dimethylbenzyl) diphenylamine | (parts) | 1.5 | 1.5 | 1.5 | 1.5 | 1.5 |
| Stearic acid | (parts) | 1 | 1 | 1 | 1 | 1 |
| Polyoxyethylenestearyl ether phosphoric acid | (parts) | 1 | 1 | 1 | 1 | 1 |
| 3-aminopropyl triethoxysilane | (parts) | 1 | 1 | 1 | | 1 |
| Side-chain type amino-modified silicone oil | (parts) | 5 | 10 | 15 | 10 | 10 |
| Stearyl alcohol | (parts) | | | | | 5 |
| Hexamethylenediamine carbamate | (parts) | 2.55 | 2.51 | 2.46 | 2.51 | 2.51 |
| 1,8-diazabicyclo[5,4,0]-undecene-7 (60%) | (parts) | 4 | 4 | 4 | 4 | 4 |
| Compound Mooney viscosity | | 101 | 91 | 82 | 88 | 71 |
| Normal physical properties | | | | | | |
| Tensile strength | (MPa) | 21.0 | 19.0 | 20.0 | 20.5 | 21.7 |
| Elongation | (%) | 140 | 150 | 150 | 260 | 160 |
| Hardness (DURO A) | | 73 | 73 | 73 | 72 | 73 |
| Oil immersion test (IRM901, 150°C, 72 hours) | | | | | | |
| Volume swelling degree $\Delta V$ | (%) | -2.7 | -2.6 | -2.4 | -2.3 | -2.9 |
| Compression set test (O-ring) | | | | | | |
| Compression set | (%) | 20.9 | 18.6 | 23.2 | 25.6 | 24.1 |
| Cold resistance test (constant rate of extension test) | | | | | | |
| TR10 | (°C) | -21 | -21 | -21 | -21 | -22 |
| Skin friction resistance test | | | | | | |
| Static friction coefficient | | 0.4 | 0.3 | 0.2 | 0.3 | 0.3 |
| Dynamic friction coefficient | | 0.3 | 0.1 | 0.1 | 0.2 | 0.2 |

From Table 2, the cross-linked rubber which is obtained by cross-linking a rubber composition which contains carboxyl group-containing highly saturated nitrile rubber and a reactive silicone oil and silica has excellent normal physical properties and oil resistance and is excellent in compression set resistance and skin friction resistance as well (Examples 10 to 14). Note that, in Examples 10 to 14, the above-mentioned method was followed to perform a cold resistance test (TR test), whereupon the results became the same extent as Examples 1 to 9 and the cold resistance was excellent.

Synthesis Example 2 (Production of Carboxyl Group-Containing Highly Saturated Nitrile Rubber (R3))

A metal bottle was successively charged with an ion exchanged water 180 parts, concentration 10 wt% sodium dodecylbenzenesulfonate aqueous solution 25 parts, acrylonitrile 20 parts, mono n-butyl maleate 5 parts, n-butyl acrylate 35 parts, and t-dodecyl mercaptan (molecular weight adjuster) 0.5 part. The inside gas was replaced with nitrogen three times, then 1,3-butadiene 40 parts was charged. The metal bottle was held at 5°C, cumen hydroperoxide (polymerization initiator) 0.1 part was added, and the metal bottle was rotated while causing a polymerization reaction for 16 hours. Further, a concentration 10 wt% hydroquinone aqueous solution (polymerization terminator) 0.1 part was added to stop

the polymerization reaction, then a water temperature 60°C rotary evaporator was used to remove the residual monomers and obtain a latex (L3) of carboxyl group-containing nitrile rubber (solid content concentration of approximately 30 wt%).

Next, to the autoclave, a palladium catalyst (solution of 1 wt% palladium acetate acetone solution and same weight of ion exchanged water mixed together) was added to give a palladium content, by weight ratio, of 1,000 ppm with respect to the carboxyl group-containing nitrile rubber which is contained in the obtained latex (L3) and the mixture was subjected to a hydrogen addition reaction at a temperature of 50°C and hydrogen pressure of 3 MPa for 6 hours to obtain a latex (L4) of carboxyl group-containing highly saturated nitrile rubber (R3).

Further, to the obtained latex (L4), two volumes of methanol was added to coagulate the rubber, then the rubber was vacuum dried at 60°C for 12 hours to obtain carboxyl group-containing highly saturated nitrile rubber (R3). The carboxyl group-containing highly saturated nitrile rubber (R3) had an iodine value of 10, a carboxyl group content of $2.5 \times 10^{-2}$ ephr, and a polymer Mooney viscosity ($ML_{1+4}$, 100°C) of 45. Further, the content of monomer units which have unsaturated carbon-carbon double bonds, which was calculated from the iodine value of the carboxyl group-containing highly saturated nitrile rubber (R3), was 6.6 wt% (remaining 1,3-butadiene units which have carbon-carbon double bonds calculated as 1 monomer unit).

Further, the composition of the carboxyl group-containing highly saturated nitrile rubber (R3) was acrylonitrile units 22 wt%, 1,3-butadiene units (including hydrogenated parts) 44 wt%, mono n-butyl maleate units 4 wt%, and n-butyl acrylate units 30 wt%.

Note that, when producing a carboxyl group-containing highly saturated nitrile rubber (R3), a monomer which has a halogen atom was not used, so the content ratio of monomer units which have halogen atoms was 0 wt%.

Synthesis Example 3 (Production of Carboxyl Group-Containing Acrylic Rubber (R4))

To a polymerization reactor which was equipped with a thermometer and agitator, water 200 parts, sodium lauryl sulfate 3 parts, ethyl acrylate 49 parts, n-butyl acrylate 49 parts, and mono n-butyl maleate 2 parts were charged. The reactor was reduced in pressure and degassed and the inside was replaced with nitrogen two times to fully remove the oxygen, then cumen hydroperoxide 0.005 part and sodium formaldehyde sulfoxylate 0.002 part were added and emulsion polymerization was started under ordinary pressure at a temperature of 30°C to cause a reaction until reaching a polymerization conversion rate of 95%. The obtained emulsion polymerization solution was coagulated by a calcium chloride solution, then the result was rinsed and dried to obtain carboxyl group-containing acrylic rubber (R4). The composition of the carboxyl group-containing acrylic rubber (R4) was ethyl acrylate units 49 wt%, n-butyl acrylate units 49 wt%, and mono n-butyl maleate units 2 wt%, while the polymer Mooney viscosity ($ML_{1+4}$, 100°C) was 35. Further, when producing the carboxyl group-containing acrylic rubber (R4), in the polymerization, dienes and other monomers which are to be contained in a state having unsaturated carbon-carbon double bonds were not used, so the content ratio of the monomer units which have unsaturated carbon-carbon double bonds was 0 wt%. Further, when producing carboxyl group-containing acrylic rubber (R4), monomers which have halogen atoms were also not used, so the content ratio of the monomer units which have halogen atoms was also 0 wt%.

Example 15

Using a Bambury mixer, to 100 parts of carboxyl group-containing highly saturated nitrile rubber (R3) which was obtained at Synthesis Example 2, FEF carbon black (product name "Seast SO", made by Tokai Carbon) 50 parts, tri-2-ethylhexyl trimellitate (product name "ADK Cizer C-8", made by ADEKA, plasticizer) 5 parts, 4,4'-di-(α,α-dimethylbenzyl)diphenylamine (product name "Naugard 445", made by Crompton, anti-aging agent) 1.5 parts, stearic acid (cross-linking accelerator) 1 part, and side-chain type amino-modified silicone oil (product name "KF-865", made by ShinEtsu Chemical Co., Ltd., dynamic viscosity at 25°C: 90 $mm^2/s$, functional group equivalent: 5000 g/mol, the compound of the above-mentioned formula (6)) 10 parts were added and mixed at 50°C for 5 minutes. Next, the obtained mixture was transferred to a 50°C roll and mixed and kneaded with hexamethylenediamine carbamate (product name "Diak#1", made by Dupont Dow Elastomer, polyamine cross-linking agent falling under aliphatic polyvalent amines) 1.2 parts, and 1,8-diazabicyclo[5,4,0]-undecene-7 (DBU) (product name "RHENOGRAN XLA-60 (GE2014)", made by RheinChemie, DBU 60% (including part forming zinc dialkyl diphosphate salt), basic cross-linking accelerator) 4 parts to obtain a rubber composition.

Further, using the obtained rubber composition, the above-mentioned methods were used to evaluate the normal physical properties and skin friction resistance. The results are shown in Table 3.

Example 16

In Example 15, except for using instead of the side-chain type amino-modified silicone oil 10 parts, a two-end type amino-modified silicone oil (compound of product name "X-22-161B", made by ShinEtsu Chemical Co., Ltd., dynamic

viscosity at 25°C: 55 $mm^2/s$, functional group equivalent: 1500 g/mol, the compound of the above-mentioned formula (7)) 10 parts, the same procedure was followed as in Example 15 to prepare a rubber composition and evaluate the same. The results are shown in Table 3.

Example 17

Using a Bambury mixer, to 100 parts of carboxyl group-containing acrylic rubber (R4) which was obtained at Synthesis Example 3, FEF carbon black (product name "Seast SO", made by Tokai Carbon) 60 parts, 4,4'-di-(α,α-dimethylbenzyl)diphenylamine (product name "Naugard 445", made by Crompton, anti-aging agent) 2 parts, stearic acid (cross-linking accelerator) 2 parts, and side-chain type amino-modified silicone oil (product name "KF-865", made by ShinEtsu Chemical Co., Ltd., dynamic viscosity at 25°C: 90 $mm^2/s$, functional group equivalent: 5000 g/mol, the compound of the above-mentioned formula (6)) 10 parts were added and mixed at 50°C for 5 minutes. Next, the obtained mixture was transferred to a 50°C roll and mixed and kneaded with hexamethylenediamine carbamate (product name "Diak#1", made by Dupont Dow Elastomer, polyamine cross-linking agent falling under aliphatic polyvalent amines) 0.6 part, and 1,8-diazabicyclo[5,4,0]-undecene-7 (DBU) (product name "RHENOGRAN XLA-60 (GE2014)", made by RheinChemie, DBU 60% (including part forming zinc dialkyl diphosphate salt), basic cross-linking accelerator) 4 parts to obtain a rubber composition.

Further, using the obtained rubber composition, the above-mentioned methods were used to evaluate the normal physical properties and skin friction resistance. The results are shown in Table 3.

Comparative Example 3

In Example 15, except for not using the side-chain type amino-modified silicone oil, the same procedure was followed as in Example 15 to prepare a rubber composition and evaluate the same. The results are shown in Table 3.

Comparative Example 4

In Example 15, except for not using the side-chain type amino-modified silicone oil, but using tri-2-ethylhexyl trimellitate in 15 parts, the same procedure was followed as in Example 15 to prepare a rubber composition and evaluate the same. The results are shown in Table 3.

Comparative Example 5

In Example 17, except for not using the side-chain type amino-modified silicone oil, the same procedure was followed as in Example 17 to prepare a rubber composition and evaluate the same. The results are shown in Table 3.

Comparative Example 6

In Example 17, except for not using the side-chain type amino-modified silicone oil, but using a polyether ester-based plasticizer (product name "ADK Cizer RS-735", made by ADEKA) in 10 parts, the same procedure was followed as in Example 17 to prepare a rubber composition and evaluate the same. The results are shown in Table 3.
Table 3

Table 3

| | | Examples | | | Comp. ex. | | | |
|---|---|---|---|---|---|---|---|---|
| | | 15 | 16 | 17 | 3 | 4 | 5 | 6 |
| Formulation | | | | | | | | |
| Carboxyl group-containing highly saturated nitrile rubber (R3) | (parts) | 100 | 100 | - | 100 | 100 | - | - |
| Carboxyl group-containing acrylic rubber (R4) | (parts) | - | - | 100 | - | - | 100 | 100 |
| Carbon black | (parts) | 50 | 50 | 60 | 50 | 50 | 60 | 60 |
| Side chain type amino-modified silicone oil | (parts) | 10 | - | 10 | - | - | - | - |
| Two-end type amino-modified silicone oil | (parts) | - | 10 | - | - | - | - | - |

(continued)

| | | | Examples | | | Comp. ex. | | | |
|---|---|---|---|---|---|---|---|---|---|
| | | | 15 | 16 | 17 | 3 | 4 | 5 | 6 |
| | Polyether ester-based plasticizer | (parts) | - | - | - | - | - | - | 10 |
| | Tri-2-ethylhexyl trimellitate (plasticizer) | (parts) | 5 | 5 | - | 5 | 15 | - | - |
| | Stearic acid | (parts) | 1 | 1 | 2 | 1 | 1 | 2 | 2 |
| | 4,4'-di-(α, α-dimethylbenzyl) diphenylamine | (parts) | 1.5 | 1.5 | 2 | 1.5 | 1.5 | 2 | 2 |
| | Hexamethylenediamine carbamate | (parts) | 1.2 | 1.2 | 0.6 | 1.2 | 1.2 | 0.6 | 0.6 |
| | 1,8-diazabicyclo[5,4,0]-undecene-7 (60%) | (parts) | 4 | 4 | 4 | 4 | 4 | 4 | 4 |
| Normal physical properties | | | | | | | | | |
| | Tensile strength | (MPa) | 17.0 | 16.1 | 8.3 | 20.9 | 18.2 | 10.8 | 11.5 |
| | Elongation | (%) | 240 | 170 | 220 | 270 | 290 | 200 | 250 |
| | Hardness (DURO A) | | 69 | 69 | 64 | 70 | 66 | 65 | 64 |
| Skin friction resistance test | | | | | | | | | |
| | Static friction coefficient | | 0.5 | 0.4 | 1.2 | 1.8 | 1.5 | 2.0 | 1.6 |
| | Dynamic friction coefficient | | 0.3 | 0.3 | 0.8 | 1.4 | 1.0 | 1.7 | 1.3 |

From Table 3, it could be confirmed that when blending a reactive silicone oil into carboxyl group-containing highly saturated nitrile rubber (R3) and carboxyl group-containing acrylic rubber (R4), the obtained cross-linked rubber is low in both static friction coefficient and dynamic friction coefficient and excellent in skin friction resistance and that since it is excellent in skin friction resistance, is suitable for use as a seal member for sliding parts (Examples 15 to 17).

On the other hand, when not blending a reactive silicone oil, regardless of the amount and type of the plasticizer, both the static friction coefficient and dynamic friction coefficient become higher and the skin friction resistance becomes inferior (Comparative Examples 3 to 6).

## Claims

**1.** A nitrile rubber composition containing a carboxyl group-containing nitrile rubber, a reactive silicone oil and at least one cross-linking agent which is selected from the group consisting of an organic peroxide-based cross-linking agent and polyamine-based cross-linking agent; wherein said reactive silicone oil has at least one reactive group which is selected from the group consisting of a hydroxyl group, amino group, mercapto group, epoxy group, carboxyl group, acrylic group, and methacryl group.

**2.** The nitrile rubber composition as set forth in claim 1, wherein said carboxyl group-containing nitrile rubber has an iodine value of 120 or less.

**3.** The nitrile rubber composition as set forth in claim 1 or 2, wherein said carboxyl group-containing nitrile rubber contains α,β-ethylenically unsaturated dicarboxylic acid monoester monomer units.

**4.** The nitrile rubber composition as set forth in any one of claims 1 to 3, wherein said carboxyl group-containing nitrile rubber contains α,β-ethylenically unsaturated nitrile monomer units 5 to 60 wt%, α,β-ethylenically unsaturated dicarboxylic acid monoester monomer units 0.1 to 20 wt%, and conjugated diene monomer units 15 to 94.9 wt%.

**5.** The nitrile rubber composition as set forth in any one of claims 1 to 4 further containing silica.

**6.** A rubber composition for sliding member use containing
a carboxyl group-containing rubber which has carboxyl group-containing monomer units in a ratio of 0.1 to 20 wt%, a content ratio of monomer units which have unsaturated carbon-carbon double bonds of 20 wt% or less, and a content ratio of monomer units which have halogen atoms of 5 wt% or less,

a reactive silicone oil having at least one reactive group which is selected from the group consisting of a hydroxyl group, amino group, mercapto group, epoxy group, carboxyl group, acrylic group, and methacryl group, and
at least one cross-linking agent which is selected from the group consisting of an organic peroxide-based cross-linking agent and polyamine-based cross-linking agent.

**7.** The rubber composition for sliding member use as set forth in claim 6, wherein said carboxyl group-containing monomer units are $\alpha,\beta$-ethylenically unsaturated dicarboxylic acid monoester monomer units.

**8.** The rubber composition for sliding member use as set forth in claim 6 or 7, wherein said carboxyl group-containing rubber is a highly saturated nitrile rubber which contains $\alpha,\beta$-ethylenically unsaturated nitrile monomer units in a ratio of 5 to 60 wt%.

**9.** A cross-linked rubber obtained by cross-linking the nitrile rubber composition as set forth in any one of claims 1 to 5.

**10.** The cross-linked rubber as set forth in claim 9, which is a seal member, belt, hose, or gasket.

**11.** A cross-linked rubber for sliding member use obtained by cross-linking the rubber composition for sliding member use as set forth in any one of claims 6 to 8.

**12.** The cross-linked rubber for sliding member use as set forth in claim 11, which is a seal member for sliding parts.

## Patentansprüche

**1.** Nitrilkautschukzusammensetzung, die einen Carboxylgruppe-enthaltenden Nitrilkautschuk, ein reaktives Siliconöl und wenigstens ein Vernetzungsmittel, das aus der Gruppe, bestehend aus einem organisches Peroxid-basierten Vernetzungsmittel und Polyamin-basierten Vernetzungsmittel, ausgewählt ist, enthält; wobei das reaktive Siliconöl wenigstens eine reaktive Gruppe hat, die aus der Gruppe, bestehend aus einer Hydroxylgruppe, Aminogruppe, Mercaptogruppe, Epoxygruppe, Carboxylgruppe, Acrylgruppe und Methacrylgruppe, ausgewählt ist.

**2.** Nitrilkautschukzusammensetzung gemäß Anspruch 1, wobei der Carboxylgruppe-enthaltende Nitrilkautschuk eine Iodzahl von 120 oder weniger hat.

**3.** Nitrilkautschukzusammensetzung gemäß Anspruch 1 oder 2, wobei der Carboxylgruppe-enthaltende Nitrilkautschuk $\alpha,\beta$-ethylenisch ungesättigte Dicarbonsäuremonoester-Monomereinheiten enthält.

**4.** Nitrilkautschukzusammensetzung gemäß einem der Ansprüche 1 bis 3, wobei der Carboxylgruppe-enthaltende Nitrilkautschuk 50 bis 60 Gew.-% $\alpha,\beta$-ethylenisch ungesättigte Nitrilmonomereinheiten, 0,1 bis 20 Gew.-% $\alpha,\beta$-ethylenisch ungesättigte Dicarbonsäuremonoester-Monomereinheiten und 15 bis 94,9 Gew.-% konjugierte Dien-Monomereinheiten enthält.

**5.** Nitrilkautschukzusammensetzung gemäß einem der Ansprüche 1 bis 4, die außerdem Siliciumdioxid enthält.

**6.** Kautschukzusammensetzung zur Gleitelementverwendung, enthaltend
einen Carboxylgruppe-enthaltenden Kautschuk, der Carboxylgruppe-enthaltende Monomereinheiten in einer Verhältnismenge von 0,1 bis 20 Gew.-%, ein Gehaltsverhältnis von Monomereinheiten, die ungesättigte Kohlenstoff-Kohlenstoff-Doppelbindungen haben, von 20 Gew.-% oder weniger und ein Gehaltsverhältnis von Monomereinheiten, die Halogenatome haben, von 5 Gew.-% oder weniger hat,
ein reaktives Siliconöl, das wenigstens eine reaktive Gruppe hat, welche aus der Gruppe, bestehend aus einer Hydroxylgruppe, Aminogruppe, Mercaptogruppe, Epoxygruppe, Carboxylgruppe, Acrylgruppe und Methacrylgruppe, ausgewählt ist, und
wenigstens ein Vernetzungsmittel, das aus der Gruppe, bestehend aus einem organisches Peroxid-basierten Vernetzungsmittel und Polyamin-basierten Vernetzungsmittel, ausgewählt ist.

**7.** Kautschukzusammensetzung zur Gleitelementverwendung gemäß Anspruch 6, wobei die Carboxylgruppe-enthaltenden Monomereinheiten $\alpha,\beta$-ethylenisch ungesättigte Dicarbonsäuremonoester-Monomereinheiten sind.

**8.** Kautschukzusammensetzung zur Gleitelementverwendung gemäß Anspruch 6 oder 7, wobei der Carboxylgruppe-enthaltende Kautschuk ein hochgradig gesättigter Nitrilkautschuk ist, der α,β-ethylenisch ungesättigte Nitrilmonomereinheiten in einer Verhältnismenge von 5 bis 60 Gew.-% enthält.

**9.** Vernetzter Kautschuk, der durch Vernetzung der Nitrilkautschukzusammensetzung gemäß einem der Ansprüche 1 bis 5 erhalten wurde.

**10.** Vernetzter Kautschuk gemäß Anspruch 9, der ein Dichtungselement, ein Band, ein Schlauch oder eine Dichtung ist.

**11.** Vernetzter Kautschuk zur Gleitelementverwendung, der durch Vernetzung der Kautschukzusammensetzung zur Gleitelementverwendung gemäß einem der Ansprüche 6 bis 8 erhalten wurde.

**12.** Vernetzter Kautschuk zur Gleitelementverwendung gemäß Anspruch 11, der ein Dichtungselement für Gleitteile ist.

**Revendications**

**1.** Composition de caoutchouc nitrile contenant un caoutchouc nitrile contenant un groupe carboxyle, une huile de silicone réactive et au moins un agent de réticulation qui est choisi dans le groupe consistant en un agent de réticulation à base de peroxyde organique et un agent de réticulation à base de polyamine ; dans laquelle ladite huile de silicone réactive comporte au moins un groupe réactif qui est choisi dans le groupe consistant en un groupe hydroxyle, un groupe amino, un groupe mercapto, un groupe époxy, un groupe carboxyle, un groupe acrylique, et un groupe méthacryle.

**2.** Composition de caoutchouc nitrile selon la revendication 1, dans laquelle ledit caoutchouc nitrile contenant un groupe carboxyle a un indice d'iode de 120 ou moins.

**3.** Composition de caoutchouc nitrile selon la revendication 1 ou 2, dans laquelle ledit caoutchouc nitrile contenant un groupe carboxyle contient des motifs monomères de monoester d'acide dicarboxylique α,β-éthyléniquement insaturé.

**4.** Composition de caoutchouc nitrile selon l'une quelconque des revendications 1 à 3, dans laquelle ledit caoutchouc nitrile contenant un groupe carboxyle contient des motifs monomères de nitrile α,β-éthyléniquement insaturé à hauteur de 5 à 60 % en poids, des motifs monomères de monoester d'acide dicarboxylique α,β-éthyléniquement insaturé à hauteur de 0,1 à 20 % en poids, et des motifs monomères de diène conjugués à hauteur de 15 à 94,9 % en poids.

**5.** Composition de caoutchouc nitrile selon l'une quelconque des revendications 1 à 4 contenant en outre de la silice.

**6.** Composition de caoutchouc à utiliser dans un organe à glissement contenant
un caoutchouc contenant un groupe carboxyle qui comporte des motifs monomères contenant un groupe carboxyle dans un rapport de 0,1 à 20 % en poids, un rapport de teneur de motifs monomères qui comportent des doubles liaisons carbone-carbone insaturées de 20 % en poids ou moins, et un rapport de teneur de motifs monomères qui comportent des atomes d'halogène de 5 % en poids ou moins,
une huile de silicone réactive comportant au moins un groupe réactif qui est choisi dans le groupe consistant en un groupe hydroxyle, un groupe amino, un groupe mercapto, un groupe époxy, un groupe carboxyle, un groupe acrylique, et un groupe méthacryle, et
au moins un agent de réticulation qui est choisi dans le groupe consistant en un agent de réticulation à base de peroxyde organique et un agent de réticulation à base de polyamine.

**7.** Composition de caoutchouc à utiliser dans un organe à glissement selon la revendication 6, dans laquelle lesdits motifs monomères contenant un groupe carboxyle sont des motifs monomères de monoester d'acide dicarboxylique α,β-éthyléniquement insaturé.

**8.** Composition de caoutchouc à utiliser dans un organe à glissement selon la revendication 6 ou 7, dans laquelle ledit caoutchouc contenant un groupe carboxyle est un caoutchouc nitrile hautement saturé qui contient des motifs monomères de nitrile α,β-éthyléniquement insaturé dans un rapport de 5 à 60 % en poids.

**9.** Caoutchouc réticulé obtenu en réticulant la composition de caoutchouc nitrile telle que précisée dans l'une quelconque des revendications 1 à 5.

**10.** Caoutchouc réticulé selon la revendication 9, qui est un organe formant joint, une courroie, un tuyau souple, ou une garniture d'étanchéité.

**11.** Caoutchouc réticulé à utiliser dans un organe à glissement obtenu par réticulation de la composition de caoutchouc à utiliser dans un organe à glissement tel que précisé dans l'une quelconque des revendications 6 à 8.

**12.** Caoutchouc réticulé à utiliser dans un organe à glissement selon la revendication 11, qui est un organe formant joint pour des pièces à glissement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002212341 A
- JP 2001055471 A
- US 6657014 B